(19) Europäisches Patentamt
European Patent Office
Office européen des brevets

(11) EP 0 585 873 B1

(12) EUROPÄISCHE PATENTSCHRIFT

(45) Veröffentlichungstag und Bekanntmachung des Hinweises auf die Patenterteilung:
**29.12.1997 Patentblatt 1997/52**

(51) Int Cl.[6]: **C09B 33/153**, C09B 41/00, C09B 56/12

(21) Anmeldenummer: **93113899.4**

(22) Anmeldetag: **31.08.1993**

(54) **Verfahren zur Herstellung von Disazopigmenten**

Method of preparing disazo pigments

Procédé de préparation de pigments bisazoiques

(84) Benannte Vertragsstaaten:
**BE CH DE DK ES FR GB IT LI**

(30) Priorität: **02.09.1992 DE 4229207**

(43) Veröffentlichungstag der Anmeldung:
**09.03.1994 Patentblatt 1994/10**

(73) Patentinhaber: **Clariant GmbH**
**65929 Frankfurt am Main (DE)**

(72) Erfinder:
- **Jung, Rüdiger, Dr.**
  **D-65779 Kelkheim (Taunus) (DE)**
- **Weide, Joachim**
  **D-65779 Kelkheim (Taunus) (DE)**
- **Metz, Hans Joachim, Dr.**
  **D-64285 Darmstadt (DE)**

(56) Entgegenhaltungen:
**EP-A- 0 025 164**
**DE-A- 1 544 453**
**DE-A- 2 643 214**
**US-A- 3 441 555**
**US-A- 4 785 082**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 585 873 B1

## Beschreibung

Die vorliegende Erfindung liegt auf dem technischen Gebiet der Disazopigmente.

Disazopigmente der allgemeinen Formel (I)

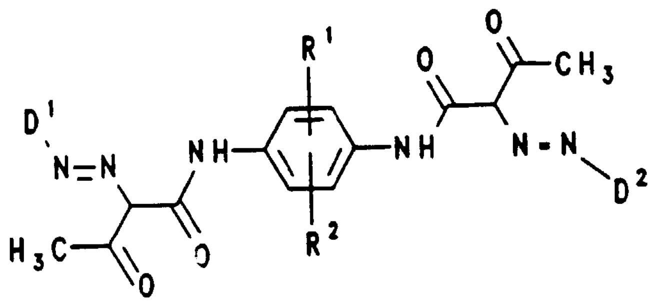

(I)

sowie Verfahren zu ihrer Herstellung sind unter anderem in folgenden Offenlegungs- und Patentschriften beschrieben:

DE-A-15 44 453 (GB-A-10 66 769), DE-A-22 54 625 (US-PS 3 872 078),
DE-A-40 39 590 (GB-A 22 39 254), EP-A-25 164 (CA-A-11 35 688),
US-PS 3 413 279 und US-PS 3 513 154.

In fast allen beschriebenen Verfahren ist jedoch immer ein Verfahrensschritt in Gegenwart eines organischen Lösungsmittels notwendig, um die Pigmente in anwendungstechnisch wertvoller Form zu erhalten. In vielen Fällen ist noch ein zusätzlicher Verfahrensschritt notwendig, beispielsweise die Nachbehandlung der Rohpigmente in einem organischen Lösungsmittel.

In der DE-A-2135468 (US-PS 3 759 733) wird die Herstellung eines Pigments der Formel (I) ohne die Verwendung eines Lösungsmittels beschrieben. Das erhaltene Pigment erfüllt jedoch die Anforderungen, die heute an ein Druckfarbenpigment gestellt werden, nicht zufriedenstellend.

In der EP-A-25164 (CA-A-11 35 688) und der DE-A-2410240 (US-PS 3 978 038) werden Verfahren beschrieben, nach denen die im wäßrigen Medium hergestellten Pigmente der allgemeinen Formel (I) in Lösungsmitteln, beispielsweise Dimethylformamid, N-Methyl-2-pyrrolidon, Nitrobenzol oder o-Dichlorbenzol, in einem zusätzlichen Verfahrensschritt nachbehandelt werden.

In der DE-A-2511092 (US-PS 3 951 943) wird ein Verfahren zur Herstellung der genannten Pigmente im wäßrigen Medium beschrieben, wobei dem wäßrigen Medium jedoch große Anteile cyclischer Ether, beispielsweise Tetrahydrofuran oder 1,4-Dioxan, zugesetzt werden.

Verfahren, nach denen sich derartige Disazopigmente durch Umsetzung von Triazenen mit 1,4-Bis(acetoacetylamino)-benzolen in organischen Lösungsmitteln herstellen lassen, sind unter anderem bekannt aus der DE-A-2326298 (CA-PS 994 762), der DE-A-2410240 (US-PS 3 978 038) und der DE-A-2244035 (US-PS 4 055 559).

Der vorliegenden Erfindung lag die Aufgabe zugrunde, ein Verfahren zu entwickeln, nach dem Pigmente der allgemeinen Formel (I) in ökologisch und ökonomisch vorteilhafter Weise, insbesondere unter Verzicht auf organische Lösemittel, erhalten werden.

Es wurde gefunden, daß sich Pigmente der allgemeinen Formel (I) überraschenderweise in wäßrigem Medium ohne Lösungsmittelzusatz und ohne einen zusätzlichen Verfahrensschritt zur Nachbehandlung herstellen lassen, wenn man bei der Herstellung des jeweiligen Pigments spätestens vor dessen Isolierung ein oder mehrere nichtionische Tenside, die in wäßriger Lösung einen Trübungspunkt aufweisen, zusetzt.

Gegenstand der vorliegenden Erfindung ist ein Verfahren zur Herstellung von Disazopigmenten der Formel (I) oder einem Gemisch besagter Disazopigmente, worin

Die DE-A-2 643 214 offenbart ein Verfahren zur Herstellung von Monoazo-Dispersionsfarbstoffen in Gegenwart von nichtionogenen Tensiden.

In der US-A- 3 441 555 werden Disazopigmente vom 1,4-Bis(acetoacetylamino)-benzol-Typ beschrieben, die in Gegenwart von nichtionischen Tensiden, wie Laurinsäurediethanolamid, welches in Wasser unlöslich ist, hergestellt werden.

$D^1$ und $D^2$ gleich oder verschieden sind und einen unsubstituierten oder einen durch 1 bis 5, vorzugsweise 1 bis 3, Reste substituierten Phenylrest,
einen unsubstituierten Naphthylrest oder einen durch 1 bis 5, vorzugsweise 1 bis 3, Reste substituierten

Naphthylrest,
einen unsubstituierten Anthrachinonrest oder einen durch 1 bis 5, vorzugsweise 1 bis 3, Reste substituierten Anthrachinonrest,
einen Rest eines kondensierten aromatischen Heterocyclus, welcher 1 bis 3 gleiche oder verschiedene Heteroatome aus der Reihe Stickstoff, Sauerstoff und Schwefel enthält und welcher unsubstituiert oder durch 1 bis 3 Reste substituiert ist, vorzugsweise einen Rest eines benzokondensierten heterocyclischen Fünf- oder Sechsringes;

$R^1$ und $R^2$ gleich oder verschieden sind und ein Wasserstoff- oder Halogenatom, eine $C_1$-$C_4$-Alkyl-, $C_1$-$C_4$-Alkoxy-, $C_1$-$C_5$-Alkoxycarbonyl-, Nitro-, Cyano-, Phenoxy- oder Trifluormethylgruppe bedeuten,

durch Azokupplung,
dadurch gekennzeichnet, daß man die Herstellung des Pigments

a) in wäßrigem ggf. acetatgepuffertem Medium und in Abwesenheit eines organischen Lösungsmittels durchführt und
b) spätestens unmittelbar vor der Isolierung des Disazopigments mindestens ein nichtionisches Tensid, das in wäßriger Lösung einen Trübungspunkt hat, zusetzt.

Das erfindungsgemäß eingesetzte nichtionische Tensid kann an unterschiedlichen Stellen des Herstellungsverfahrens zugesetzt werden. Beispielsweise kann der Zusatz vor der Azokupplung zur Diazoniumsalzlösung oder zur Lösung oder Suspension der Kupplungskomponente erfolgen. Der Zusatz kann auch zu verschiedenen Zeitpunkten vorgenommen werden. Bevorzugt ist der Zusatz vor einem eventuellen Aufheizen der Pigmentsuspension. Der Zusatz des nichtionischen Tensids muß jedoch spätestens vor der Isolierung des Disazopigments erfolgen.

Die Isolierung des Pigments aus der Reaktionsmischung geschieht durch Filtration, Abpressen oder ähnliche übliche Maßnahmen. Das Waschen mit Wasser erfolgt bei einer Temperatur oberhalb des Trübungspunkts des verwendeten nichtionischen Tensids. Dadurch können lösliche Nebenprodukte, beispielsweise Salze, ausgewaschen werden, ohne den Tensidgehalt des Produkts wesentlich zu verändern.

Die Auswahl des erfindungsgemäß eingesetzten nichtionischen Tensids sowie die erforderliche Tensidmenge sind von der chemischen Konstitution, der spezifischen Oberfläche des jeweiligen Pigments der Formel (I), den speziellen Verfahrensbedingungen und den anwendungstechnischen Anforderungen an das Pigment abhängig.

Ein für den Zweck der vorliegenden Erfindung geeignetes nichtionisches Tensid muß in wäßriger Lösung einen Trübungspunkt aufweisen. Der Trübungspunkt der Tenside in Wasser liegt bevorzugt zwischen 5 und 90°C, insbesondere zwischen 20 und 70°C. Die Trübungspunkte werden nach DIN 53917 bestimmt. Die Menge an nichtionischem Tensid oder Tensidgemisch liegt zwischen 3 und 25, vorzugsweise zwischen 7 und 17, Gewichtsteilen, bezogen auf 100 Gewichtsteile Pigment oder Pigmentgemisch der allgemeinen Formel (I).

Für das erfindungsgemäße Verfahren ist eine Vielzahl nichtionogener Tenside mit unterschiedlichen chemischen Strukturen von Interesse, sofern sie die Bedingung erfüllen, einen Trübungspunkt in Wasser aufzuweisen. Von Interesse sind in diesem Zusammenhang Oxalkylate von aromatischen, cycloaliphatischen oder heterocyclischen Hydroxy- oder Aminoverbindungen oder Mischungen aus mindestens zwei der genannten Oxalkylate. Als besonders geeignet haben sich nichtionogene Oxalkylate von Alkoholen, Fettalkoholen, Phenolen, Alkylphenolen, Naphtholen, Alkylnaphtholen und Fettaminen mit Ethylenoxid und/oder Propylenoxid sowie Blockpolymere von Ethylenoxid und Propylenoxid erwiesen. Die Temperatur des Trübungspunktes derartiger Verbindungen hängt von der Länge der Polyalkylenoxy-Kette ab und kann bei der Synthese der Tenside durch Wahl der eingesetzten Menge an Ethylenoxid und/oder Propylenoxid variiert werden. Von besonderem Interesse sind Verbindungen mit einer Poly(ethylenoxy)-Kette oder einer Poly(ethylenoxy)-poly-(methylethylenoxy)-Kette, die über ein Sauerstoff- oder ein Stickstoffatom mit Resten der folgenden Art verbunden sind:
aliphatische oder cycloaliphatische, primäre oder sekundäre, gesättigte oder ungesättigte Alkylreste mit 6 bis 26 C-Atomen, insbesondere bevorzugt Alkylreste mit 10 bis 18 C-Atomen Kettenlänge, beispielsweise Nonyl-, Decyl-, Undecyl-, Dodecyl-, Tridecyl-, Tetradecyl-, Pentadecyl-, Hexadecyl-, Heptadecyl-, Octadecyl-, 2-Butyloctyl-, 2-Phenyloctyl-, 2-Hexyldecyl-, 2-Heptyl-undecyl-, 2-Octyldodecyl-, 2-Nonyltridecyl-, 2-Decyltetradecyl-, 10-Undecenyl-, Oleyl-, 9-Octadecenyl-, Linoleyl- oder Linolenylreste;
aromatische Reste wie der gegebenenfalls substituierte Phenyl- oder der Alkylphenylrest mit bis zu drei primären oder sekundären $C_4$-$C_{12}$-Alkylresten, vorzugsweise den Hexylphenyl-, Heptylphenyl-, Octylphenyl-, Nonylphenyl-, Undecylphenyl-, Dodecylphenyl-, Isononylphenyl-, Tributylphenyl- oder Dinonylphenylrest und der Phenylrest, der mit weiteren aromatischen Resten substituiert ist, wie der Benzyl-p-phenyl-phenylrest;
Naphthyl- oder $C_1$-$C_4$-Alkylnaphthylreste, vorzugsweise der $\alpha$-Naphthyl- oder $\beta$-Naphthylrest oder der Alkyl-$\beta$-naphthylrest mit 1 bis 3 unverzweigten oder verzweigten $C_1$-$C_{16}$-Alkylgruppen, beispielsweise Methyl, Butyl, Octyl, Nonyl, Decyl, Dodecyl oder Tetradecyl;

unsubstituierte oder mit 1 bis 3 $C_1$-$C_{18}$-Alkylresten substituierte heterocyclische Reste oder mit 1 bis 3 heterocyclischen Resten substituierte Alkylreste, beispielsweise der 2-[2-(8-Heptadecen-1-yl)-4,5-dihydro-1-imidazolyl]-ethyl-Rest. Mit heterocyclischen Resten sind sowohl cycloaliphatische als auch aromatische Reste gemeint.

Von besonderem Interesse sind auch Gemische der vorstehend genannten Verbindungen und insbesondere Gemische, wie sie bei der Oxalkylierung mit Ethylenoxid und/oder Propylenoxid von synthetischen Fettalkoholen aus der Oxosynthese oder von Fettalkoholen aus natürlichen Rohstoffen nach Fettspaltung und Reduktion gewonnen werden. Als natürliche Rohstoffe kommen Kokosöl, Palmöl, Baumwollsaatöl, Sonnenblumenöl, Sojabohnenöl, Leinöl, Rüböl, Talg und Fischöl in Betracht. Ebenso geeignet sind entsprechende Fettamin-Oxalkylate aus den genannten natürlichen Rohstoffen, insbesondere Kokosfettamin, Talgamin oder Oleylamin.

Von besonderem Interesse sind ferner oxalkylierte, höhermolekulare oberflächenaktive Mittel, beispielsweise die in DE-A-2 156 603 (US-PS 3 841 888 und 3 947 287) beschriebenen Aminooxalkylate, die in DE-A-2 730 223 beschriebenen Kondensationsprodukte aus Phenolen, Alkanolen, Alkylenoxid und Carbonsäuren, die in DE-A1-3 026 127 (US-PS 4 960 935) beschriebenen Bisphenolderivate, die in DE-A1-24 21 606 (US-PS 3 998 652) beschriebenen Kondensationsprodukte aus Phenolen, Formaldehyd, Aminen und Alkylenoxid sowie die in EP-A1-17 189 (CA-A-1 158 384) beschriebenen wasserlöslichen Oxalkylierungsprodukte, wobei diejenigen oberflächenaktiven Mittel ausgenommen sind, die keinen Trübungspunkt in wäßriger Lösung haben.

Nach dem erfindungsgemäßen Verfahren lassen sich Pigmente oder Pigmentgemische der allgemeinen Formel (I) herstellen. Die allgemeine Formel (I) ist als idealisierte Formel zu verstehen und umfaßt auch die entsprechenden tautomeren Verbindungen sowie die möglichen Konfigurationsisomere jeder tautomeren Form. Verbindungen der allgemeinen Formel (I) liegen überwiegend in der Hydrazonform vor. Die idealisierte Formel (I) umfaßt deshalb vor allem auch die Bishydrazonform.

Das erfindungsgemäße Verfahren wird in der Weise durchgeführt, daß man ein oder mehrere verschiedene Amine der Formel D-$NH_2$, worin D die Bedeutung von $D^1$ oder $D^2$ hat, diazotiert und mit 0,45 bis 0,55 Mol, vorzugsweise 0,5 bis 0,53 Mol, einer oder mehrerer verschiedener Verbindungen der Formel (II),

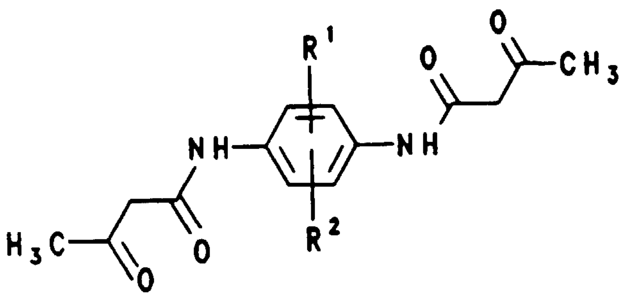

(II)

worin $R^1$ und $R^2$ die vorstehend definierten Bedeutungen haben, pro Mol der insgesamt umzusetzenden Diazoniumsalze kuppelt.

Das erfindungsgemäße Verfahren wird bevorzugt in der Weise durchgeführt, daß man ein Amin der Formel D-$NH_2$ diazotiert und mit 0,5 bis 0,53 Mol, bezogen auf 1 Mol des Amins D-$NH_2$, einer Verbindung der Formel (II) kuppelt, wobei man Pigmente der allgemeinen Formel (I) erhält, in der $D^1$ und $D^2$ die gleiche Bedeutung haben.

Das erfindungsgemäße Verfahren wird insbesondere in der Weise durchgeführt, daß man ein Amin der Formel D-$NH_2$ diazotiert und mit 0,5 bis 0,53 Mol, bezogen auf 1 Mol des Amins D-$NH_2$, einer Verbindung der Formel (III) kuppelt,

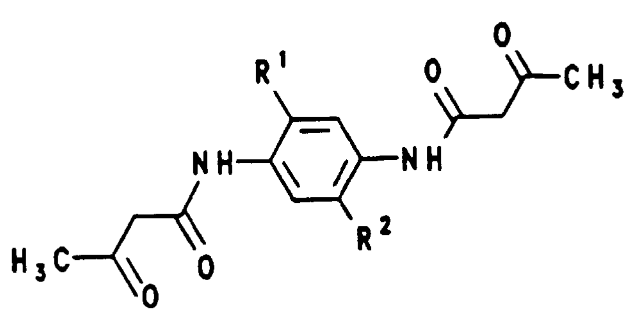

(III)

worin $R^1$ und $R^2$ die vorstehend definierten Bedeutungen haben, vorzugsweise jedoch Wasserstoff, Chlor, Brom, Trifluormethyl, Methyl, Ethyl, Methoxy, Ethoxy, Propoxy, Butoxy, Cyano, Nitro, Ethoxycarbonyl oder Methoxycarbonyl.

Als Diazokomponenten D-$NH_2$ kommen diazotierbare aromatische Amine in Betracht, insbesondere Aniline, Aminoanthrachinone und heterocyclische aromatische Amine, wobei die diazotierbaren Amine jeweils ein- oder mehrfach substituiert sein können.

Beispiele für aromatische Amine, die für das erfindungsgemäße Verfahren von Interesse sind, sind Anilin und substituierte Aniline, vorzugsweise Anilin mit 1 bis 3 Substituenten aus der Gruppe $C_1$-$C_4$-Alkyl, insbesondere Methyl oder Ethyl; $C_1$-$C_4$-Alkoxy, insbesondere Methoxy oder Ethoxy; Phenoxy, Halogenphenoxy; Carboxy; Carbalkoxy wie Carbomethoxy, Carboethoxy, Carbopropoxy, Carboisopropoxy oder Carbobutoxy; Acyl, insbesondere Acetyl oder Benzoyl; Acyloxy, insbesondere Acetoxy; Acylamino, insbesondere Acetylamino oder Benzoylamino; unsubstituiertes oder N-mono- oder N,N-disubstituiertes Carbamoyl oder unsubstituiertes oder N-mono- oder N,N-disubstituiertes Sulfamoyl, wobei als Substituenten $C_1$-$C_4$-Alkyl oder ein- bis dreifach substituiertes Phenyl oder ein unsubstituierter oder substituierter aromatischer Heterocyclus in Betracht kommen; $C_1$-$C_4$-Alkylamino oder Phenylamino; $C_1$-$C_4$-Alkylsulfonyl oder Phenylsulfonyl; Phenylsulfonylamino; Sulfo; Cyano; Halogen, insbesondere Chlor oder Brom; Nitro und Trifluormethyl.

Beispiele für substituierte Aniline, die für das erfindungsgemäße Verfahren von Interesse sind, sind 2-, 3- und 4-Nitroanilin, 2-, 3- und 4-Chloranilin, 2-, 3- und 4-Methylanilin, 2-, 3- und 4-Ethylanilin, 2-, 3- und 4-Trifluormethylanilin und 2-, 3- und 4-Methoxyanilin; 2,3-, 2,4-, 2,5-, 2,6-, 3,4- und 3,5-Dinitroanilin, 2,3-, 2,4-, 2,5-, 2,6-, 3,4- und 3,5-Dichloranilin, 4-Chlor-2-nitroanilin, 4-Methyl-2-nitroanilin und 4-Methoxy-2-nitroanilin; 5-Chlor-2-nitroanilin, 5-Methyl-2-nitroanilin und 5-Methoxy-2-nitroanilin; 2-Chlor-4-nitroanilin, 2-Methyl-4-nitroanilin und 2-Methoxy-4-nitroanilin; 2-Chlor-5-nitroanilin, 2-Methyl-5-nitroanilin und 2-Methoxy-5-nitroanilin; 2-Chlor-4-methylanilin und 2-Chlor-4-methoxyanilin; 2-Chlor-5-methylanilin, 2-Chlor-5-methoxyanilin und 2-Chlor-5-trifluormethylanilin; 3-Chlor-2-methylanilin und 3-Chlor-2-methoxyanilin; 4-Chlor-2-methylanilin, 4-Chlor-2-methoxyanilin, 4-Chlor-2,5-dimethylanilin und 4-Chlor-2-trifluormethylanilin; 5-Chlor-3-methylanilin, 5-Chlor-3-methoxyanilin, 5-Chlor-2-phenoxyanilin und 5-Chlor-2-(4-chlorphenoxy)-anilin; 2,4,5-, 2,3,4-, 2,3,5-, 2,4,6-, 2,3,6- und 3,4,5-Trichloranilin; 4-Phenoxyanilin; 3,5-Bis(trifluormethyl)-anilin;
5-Methyl-2-methoxyanilin; 4-Acetylaminoanilin und
2-Chlor-4-methyl-5-acetylaminoanilin; 4-Benzoylamino-2,5-dimethoxyanilin, 4-Benzoylamino-2-chlor-5-methoxyanilin, 4-Benzoylamino-2-methoxy-5-methylanilin und 5-Benzoylamino-2,4-dimethylanilin; 4-Cyano-2,5-dimethoxyanilin und 2-Chlor-4-cyano-5-methylanilin; 2-, 3- und 4-Aminobenzoesäure; 2-, 3- und 4-Aminobenzoesäuremethylester, -ethylester, -propylester und -butylester, insbesondere 2-Aminobenzol 1,4-dicarbonsäuredimethylester und -diethylester (Aminoterephthalsäureester), fernerhin 4-Amino-3-nitrobenzoesäuremethylester, 3-Amino-4-methoxybenzoesäureisopropylamid, 5-Aminobenzol-1,3-dicarbonsäuredimethylester und -diethylester (Aminoisophthalsäureester); ); 2-, 3- und 4-Aminobenzamid; 3-Aminobenzamid, das in 4-Stellung durch Chlor, Methyl, Methoxy oder Carbomethoxy substituiert ist, und 4-Aminobenzamid, das in 3-Stellung durch Chlor, Methyl, Methoxy oder Carbomethoxy substituiert ist, sowie Derivate der vorstehenden Benzamide, die am Amid-Stickstoffatom durch Methyl, Ethyl, Phenyl, Methylphenyl oder Dimethylphenyl, bevorzugt 2,4-Dimethylphenyl, Chlor- und Dichlorphenyl, insbesondere 4-Chlorphenyl und 2,5-Dichlorphenyl, 2-, 3- und 4-Carbamoylphenyl, Methoxyphenyl, Benzothiazol-2-yl oder Benzimidazol-2-on-5-yl substituiert sind, wie 3-Amino-4-chlorbenzamid, 3-Amino-4-methylbenzamid, 3-Amino-4-methylbenzoesäure-N-methylamid, 3-Amino-4-methoxybenzanilid, 3-Amino-4-methoxycarbonylbenzoesäure-N-(2,5-dichlorphenyl)amid, 3-Amino-4-methoxybenzoesäure-N-(4-carbamoylphenyl)amid, 3-Amino-4-methylbenzoesäure-N-(4-sulfophenyl)-amid, 4-Amino-2,5-dimethoxybenzoesäure-N-(2,4-dimethylphenyl)-amid, N-(2,4-Dihydroxychinazolin-6-yl)-4-aminobenzamid, und
N-(6-Chlorbenzothiazol-2-yl)-4-aminobenzamid; 2-Phenylsulfonylanilin, 2-Ethylsulfonyl-5-trifluormethylanilin, 5-Ethylsulfonyl-2-methoxyanilin und 5-Benzylsulfonyl-2-methoxyanilin; 2-, 3- und 4-Aminobenzolsulfonsäure, 2-Aminobenzol-1,4-disulfonsäure, 2-Amino-4-methylbenzolsulfonsäure, 2-Amino-4-chlor-5-methylbenzolsulfonsäure, 2-Amino-5-chlor-4-methylbenzolsulfonsäure und 2-Amino-5-chlor-4-carboxybenzolsulfonsäure; 2-, 3- und 4-Aminobenzolsulfonamid; 4-Amino-3-methoxybenzolsulfonamid, 4-Amino-2,5-dimethoxybenzolsulfonamid und 4-Amino-2-methoxy-5-methylbenzolsulfonamid, sowie Derivate der vorstehenden Benzolsulfonamide, die am Amid-Stickstoffatom durch Methyl, Ethyl, Phenyl, Chlorphenyl, Dichlorphenyl, Methylphenyl, Dimethylphenyl oder Methoxyphenyl substituiert sind, wie 3-Amino-4-methoxybenzol-N,N-diethylsulfonamid, 3-Amino-4-methoxybenzol-N-butylsulfonamid, 3-Amino-2-methylbenzol-N,N-dimethylsulfonamid, 4-Amino-2,5-dimethoxybenzolsulfanilid, 4-Amino-2,5-dimethoxybenzol-N-methylsufonamid, 4-Amino-2-methoxy-5-methylbenzol-N-methylsulfonamid und 5-Amino-2-methylbenzol-sufanilid.

Für das erfindungsgemäße Verfahren sind Aminoanthrachinone, die über die 1-oder 2-Position mit dem N-Atom der Azobrücke verbunden sind, von Interesse, beispielsweise unsubstituierte oder durch 1 bis 3 Reste aus der Gruppe Halogen, Hydroxy, Nitro, $C_1$-$C_4$-Alkyl, Carboxyl, Acyl, COO-$C_1$-$C_4$-Alkyl, $CONH_2$, Acylamino, $C_1$-$C_4$-Alkoxy, $C_1$-$C_6$-Alkylamino, Benzylamino, Anilino, $C_1$-$C_4$-Alkylthio und $C_1$-$C_4$-Alkylphenylsulfonylamino subsitutierte Aminoanthrachinone, insbesondere 1-Aminoanthrachinon und 2-Aminoanthrachinon sowie substituierte Aminoanthrachinone, beispielsweise 1-Amino-2-chloranthrachinon, 1-Amino-3-chloranthrachinon, 1-Amino-4-chloranthrachinon, 1-Amino-5-chloranthrachinon, 1-Amino-6-chloranthrachinon, 1-Amino-5,8-dichloranthrachinon, 1-Amino-6,7-dichloranthrachinon, 1-Amino-2-bromanthrachinon, 1-Amino-3-bromanthrachinon, 1-Amino-2,4-dibromanthrachinon, 1-Amino-6-fluoranthrachinon, 1-Amino-7-fluoranthrachinon, 1-Amino-6,7-difluoranthrachinon, 2-Amino-1-chloranthrachinon, 2-Amino-3-chloranthrachinon, 2-Amino-3-bromanthrachinon, 1-Amino-4-nitroanthrachinon, 1-Amino-5-nitroanthrachinon, 1-Amino-2-methylanthrachinon, 1-Amino-2-methyl-4-chloranthrachinon, 1-Amino-2-methyl-4-bromanthrachinon, 1-Aminoanthrachinon-2-carbonsäure, 1-Aminoanthrachinon-2-carbonsäureamid, 1-Aminoanthrachinon-2-carbonsäuremethylester, 1-Amino-4-nitroanthrachinon-2-carbonsäure, 1-Amino-2-acetylanthrachinon, 1-Amino-4-acetylaminoanthrachinon, 1-Amino-5-acetylaminoanthrachinon, 1-Amino-5-benzoylaminoanthrachinon, 1-Amino-4-benzoylaminoanthrachinon, 1-Amino-8-benzoylaminoanthrachinon, 1-Amino-4-hydroxyanthrachinon, 1-Amino-5-hydroxyanthrachinon, 1-Amino-4-methoxyanthrachinon, 1-Amino-2-methoxy-4-hydroxyanthrachinon, 1-Amino-4-methylaminoanthrachinon, 1-Amino-4-benzylaminoanthrachinon, 1-Amino-4-cyclohexylaminoanthrachinon, 1-Amino-4-anilinoanthrachinon, 1-Amino-2-brom-4-methylthioanthrachinon, 1-Amino-4-(4-methylphenylsulfonylamino)-2-phenylthioanthrachinon und 1-Amino-6-methylthioanthrachinon.

Für das erfindungsgemäße Verfahren von Interesse sind auch heterocyclische aromatische Amine aus der Gruppe Benzimidazol, Benzimidazolon, Benzimidazolthion, Benzoxazol, Benzoxazolon, Benzothiazol, 2-Phenylbenzothiazol, Benzothiazolon, Indazol, Phthalimid, Naphthalimid, Benzotriazol, Chinolin, Chinazolin, Chinazolinon, Phthalazin, Phthalazinon, Chinoxalin, Benzo[c,d]indolon, Benzimidazo[1,2-a]pyrimidon, Benzo[e][1,3]oxazinon, Dibenzo[a,c]phenazin, Chinoxalinon, Carbazol und Indol wobei die besagten Heterocyclen unsubstituiert oder durch 1 bis 3 Reste aus der Gruppe Halogen, Amino, $C_1$-$C_4$-Alkyl, Acetamido, Carbomethoxyamino, $C_1$-$C_4$-Alkoxy, Nitro, Hydroxyphenyl, Phenyl, Sulfo und Carboxyl substituiert sind, beispielsweise 4-Amino-6-chlorbenzimidazol und 4-Amino-6-chlor-2-methylbenzimidazol, 5-Amino-2-acetamidobenzimidazol und 5-Amino-2-carbomethoxyaminobenzimidazol, 5-Aminobenzimidazol-2-on, das in 6-Stellung durch Chlor, Brom, Nitro, Methoxy, Ethoxy, Carboxy, Carboxymethyl, Carboxyethyl oder Carboxybutyl substituiert sein kann; 5-Aminobenzimidazol-2-on, das in 7-Stellung durch Chlor, Brom, Methyl, Ethyl, Methoxy oder Ethoxy substituiert sein kann; 5-Amino-1-methylbenzimidazol-2-on, 5-Amino-6-methylbenzimidazol-2-on, 5-Amino-4,6-dichlorbenzimidazol-2-on, 5-Amino-4,6,7-trichlorbenzimidazol-2-on, 6-Amino-4-chlor-5-nitrobenzimidazol-2-on, -2-on, 7-Amino-5-chlor-1-methylbenzimidazol-2-on sowie 5-Amino-6-methylbenzimidazol-2-thion; 5-Amino 5-Amino-7-chlorbenzoxazol-2-on -on und 6-Amino-5-chlorbenzoxazol-2-on; 2-Amino-6-methoxybenzothiazol, 2-Amino-6-ethoxybenzothiazol, 2-Amino-6-nitrobenzothiazol, 6-Aminobenzothiazol, 6-Amino-2-acetamidobenzothiazol, 2-(4-Aminophenyl)-6-methylbenzothiazol und 6-Aminobenzothiazol-2-on; 3-Amino-6-chlorindazol, 5-Aminoindazol und 6-Aminoindazol; 5-Aminophthalimid und 3-Amino-1,8-naphthalimid; 5-Amino-2-(2-hydroxyphenyl)-benzotriazol; 6-Amino-2-hydroxy-4-methyl-chinolin, das zusätzlich durch 5-Methyl, 7-Chlor, 7-Methyl, 7-Ethoxy, 8-Methyl, 8-Methoxy oder 8-Carboxymethyl substituiert sein kann, insbesondere 6-Amino-5-chlor-4,8-dimethyl-2-hydroxychinolin, 6-Amino-8-chlor-4,5-dimethyl-2-hydroxychinolin, 6-Amino-5,8-dimethoxy-4-methyl-2-hydroxychinolin, 6-Amino-5-chlor-4-methyl-8-methoxy-2-hydroxychinolin, 6-Amino-4,5,8-trimethyl-2-hydroxychinolin und 6-Amino-5,8-dimethyl-2-hydroxychinolin; 7-Aminochinolin, 7-Amino-2-hydroxychinolin, 7-Amino-2-hydroxy-4-methylchinolin, das zusätzlich durch 6-Nitro, 6-Sulfo, 6-Methoxy, 6-Isopropoxy, 6-Butoxy, 6-Methyl oder 6-Chlor, 5-Chlor oder 5-Methyl substituiert sein kann, insbesondere 7-Amino-2-hydroxy-4-methylchinolin und 7-Amino-2-hydroxy-4-methyl-6-methoxychinolin; -methoxychinolin; 6-Amino-2-methyl-chinazolin-4-on, 6-Amino-chinazolin-2,4-dion, 6-Amino-3-methylchinazolin-2,4-dion, 6-Amino-7-nitrochinazolin-2,4-dion, -2,4-dion, 6-Amino-7-chlorchinazolin-2,4-dion, 6-Amino-8-nitrochinazolin-2,4-dion, 7-Amino-chinazolin-2,4-dion und 7-Amino-6-nitrochinazolin-2,4-dion; 6-Amino-phthalazin-1,4-dion; 6-Amino-chinoxalin-2,3-dion, das gegebenenfalls in 7-Stellung durch Chlor, Nitro, Methyl, Methoxy, Ethoxy oder Carboxy substituiert ist, insbesondere 6-Amino-5,7-dichlorchinoxalin-2,3-dion -2,3-dion und 6-Amino-5,7,8-trichlorchinoxalin-2,3-dion, 7-Amino-5-chlorchinoxalin-2,3-dion und 8-Amino-6-chlor-1-methylchinoxalin-2,3-dion; 2-Aminocarbazol sowie Aminobenzo[c,d]indol-2-on, 7- und 8-Amino-4-methyl-benzimidazo[1,2-a]pyrimid-2-on, 6- und 7-Amino-benzo[e][1,3]oxazin-2,4-dion, 6- und 7-Amino-3-phenylbenzo[e][1,3]oxazin-2,4-dion, 7-Amino-benzo[e][1,4]oxazin-3-on und 11-Amino-dibenzo[a,c]phenazin.

Als besonders bevorzugte Diazokomponenten D-$NH_2$ im Sinne des erfindungsgemäßen Verfahrens kommen 5-Nitro-2-aminoanisol, 4-Methyl-2-nitroanilin, 4-Nitro-2-aminoanisol, 5-Aminobenzimidazol-2-on, 2-Aminoterephthalsauredimethylester, 4-Amino-3-nitrobenzoesäuremethylester, 4-Aminobenzamid, Anthranilsäure, 3-Amino-4-methoxybenzoesäuresisopropylamid, 2,4-Dichloranilin, Anilin-2,5-disulfonsäure, 3-Amino-4-methoxybenzanilid, Anthranilsäuremethylester, 2-(4-Aminophenyl)-6-methylbenzothiazol oder Gemische der genannten Verbindungen in Betracht.

Als Kupplungskomponenten für das erfindungsgemäße Verfahren kommen Verbindungen der allgemeinen Formel (II) in Betracht. Vorzugsweise verwendet man solche der allgemeinen Formel (III), beispielsweise 1,4-Bis(acetoacetylamino)benzol, 2-Chlor-1,4-bis(acetoacetylamino)benzol, 2-Brom-1,4-Bis(acetoacetylamino)benzol, 2-Trifluormethyl-1,4-bis(acetoacetylamino)benzol, 2-Methoxycarbonyl-1,4-bis(acetoacetylamino)benzol, 2-Ethoxycarbonyl-1,4-bis(acetoacetylamino)benzol, 2-Cyano-1,4-bis(acetoacetylamino)benzol, 2-Methyl-1,4-bis(acetoacetylamino) benzol, 2-Methoxy-1,4-bis(acetoacetylamino)benzol, 2-Ethoxy-1,4-bis(acetoacetylamino)benzol, 2-Propoxy-1,4-bis (acetoacetylamino)benzol, 2-iso-Propoxy-1,4-bis(acetoacetylamino)benzol, 2-Butoxy-1,4-bis(acetoacetylamino)benzol, 2-Phenoxy-1,4-bis(acetoacetylamino)benzol, 2-Nitro-1,4-bis(acetoacetylamino)benzol, 2,5-Dimethoxy-1,4-bis (acetoacetylamino)benzol, 2,5-Diethoxy-1,4-bis(acetoacetylamino)benzol, 2-Ethoxy-5-methoxy-1,4-bis(acetoacetylamino)benzol, 2,5-Dichlor-1,4-bis(acetoacetylamino)benzol, 2-Chlor-5-methyl-1,4-bis(acetoacetylamino)benzol, 2-Chlor-5-methoxy-1,4-bis(acetoacetylamino)benzol, 2-Chlor-5-ethoxy-1,4-bis(acetoacetylamino)benzol, 2,5-Dimethyl-1,4-bis (acetoacetylamino)benzol, 2-Methyl-5-methoxy-1,4-bis(acetoacetylamino)benzol, 2-Methyl-5-ethoxy-1,4-bis(acetoacetylamino)benzol, 2-Methyl-5-propoxy-1,4-bis(acetoacetylamino)benzol, 2-Methyl-5-isopropoxy-1,4-bis(acetoacetylamino)benzol, 2-Methyl-5-butoxy-1,4-bis(acetoacetylamino)benzol.

Als besonders bevorzugte Kupplungskomponenten im Sinne des erfindungsgemäßen Verfahrens kommen 1,4-Bis (acetoacetylamino)-benzol, 2,5-Dimethyl-1,4-bis(acetoacetylamino)benzol, 2-Chlor-1,4-bis(acetoacetylamino)benzol und 2,5-Dichlor-1,4-bis(acetoacetylamino)benzol in Betracht.

Die Kupplungsreaktion wird nach einer der üblichen Methoden im wäßrigen Medium durchgeführt, indem man

a) eine Lösung des Diazoniumsalzes zu einer Suspension oder Dispersion der Kupplungskomponente zugibt, oder
b) eine Lösung des Diazoniumsalzes und eine Lösung, Suspension oder Dispersion der Kupplungskomponente zu einer Pufferlösung oder in eine Mischdüse gleichzeitig zudosiert, oder
c) eine Lösung der Kupplungskomponente zu einer Lösung des Diazoniumsalzes zugibt, oder
d) eine Suspension oder Dispersion der Kupplungskomponente zu einer Lösung des Diazoniumsalzes zugibt.

Die Verfahrensparameter Zeit, Temperatur und pH-Wert unterscheiden sich nur wenig von denen in herkömmlichen Kupplungsverfahren und sind somit dem Fachmann bekannt.

Im erfindungsgemäßen Verfahren vorteilhaft sind in den meisten Fällen die Kupplungsmethoden b), c) und d), besonders vorteilhaft jedoch die Methode d).

Weiterhin kann es vorteilhaft sein, die Kupplung in Gegenwart gebräuchlicher, die Kupplung fördernder Mittel durchzuführen, wie beispielsweise langkettige Aminoxide und Phosphinoxide. Die Anwendung der Kupplungsmethode d) für das erfindungsgemäße Verfahren in Kombination mit dem Zusatz von Kupplungsbeschleunigern, beispielsweise langkettigen Aminoxiden, ist besonders vorteilhaft, weil in der Mehrzahl der Fälle bei dieser Ausgestaltung des Verfahrens der Gehalt an Monokupplungsprodukten auf ein Minimum beschränkt werden kann und die resultierenden Pigmente dadurch anwendungstechnische Vorteile, wie verbesserte Lichtechtheit und Lösungsmittelechtheit, aufweisen.

Gegebenenfalls können beim erfindungsgemäßen Verfahren noch weitere Hilfsmittel, wie anionenaktive oder kationenaktive oberflächenaktive Substanzen oder natürliche oder synthetische Harze oder Harzderivate zugegeben werden. Weiterhin kann es günstig sein, bei der Herstellung der Disazopigmente gebräuchliche Additive zuzusetzen, beispielsweise solche, die die rheologischen Eigenschaften der aus den Pigmenten hergestellten Druckfarben günstig beeinflussen.

Häufig ist es zweckmäßig, die nach der Kupplungsreaktion erhaltenen Disazopigmente in der Reaktionsmischung, gegebenenfalls unter erhöhtem Druck, für einige Zeit zu erhitzen.

Weiterhin lassen sich solche erfindungsgemäß herstellbaren Verbindungen der allgemeinen Formel (I), die eine oder mehrere verlackbare saure Gruppen wie Sulfo- oder Carboxygruppen enthalten, nach üblichen Verfahren in Farblacke überführen.

Die Isolierung der erfindungsgemäß hergestellten Pigmente erfolgt auf übliche Weise, beispielsweise durch Filtrieren, Waschen und Trocknen des Filterkuchens.

Die nach dem erfindungsgemäßen Verfahren hergestellten Pigmente eignen sich besonders gut zur Herstellung von Druckfarben und zeigen hervorragende Eigenschaften hinsichtlich der für Druckfarbenpigmente wichtigen Kriterien wie Transparenz, Glanz und Farbstärke. Besonders bevorzugt ist die Verwendung der erfindungsgemäß hergestellten Disazopigmente zur Herstellung von lösemittelhaltigen Tief- und Flexodruckfarben sowie von solchen auf wäßriger Basis.

In den folgenden Beispielen beziehen sich "Teile" auf das Gewicht, "Volumenteile" verhalten sich zu Gewichtsteilen wie Liter zu Kilogramm.

Beispiel 1:

67,3 Teile 5-Nitro-2-aminoanisol werden in 120 Volumenteilen 31%iger Salzsäure und 150 Volumenteilen Wasser zwei Stunden bei etwa 22°C gerührt. Es werden 300 Teile Eis zugegeben und innerhalb 15 Minuten werden 57 Volumenteile 38%ige Natriumnitritlösung zugetropft. Es wird zwei Stunden bei 5°C bis 10°C gerührt. Die so erhaltene Diazoniumsalzlösung klärt man durch Filtration und zerstört den Nitritüberschuß durch Amidosulfonsäure.

55,3 Teile 1,4-Bis(acetoacetylamino)benzol werden in 900 Volumenteilen Wasser und 64 Volumenteilen 33%iger Natronlauge gelöst und die Lösung mit 500 Teilen Eis versetzt. Durch Zugabe von 110 Volumenteilen 50%iger Essigsäure innerhalb einer Minute wird die Kupplungskomponente ausgefällt.

In einem Reaktionsgefäß zur Azokupplung werden die Diazoniumsalzlösung, 500 Teile Eis und 12,6 Teile einer 30%igen wäßrigen Lösung eines Cocosalkyldimethylaminoxids vorgelegt, und mit 200 Volumenteilen 4-molarer Natriumacetatlösung wird der pH-Wert auf 4,2 bis 4,4 eingestellt. Diese Mischung wird innerhalb von 45 Minuten mit der Suspension der Kupplungskomponente versetzt.

Nach beendeter Kupplung gibt man 25,4 Teile eines $C_{12}$-$C_{15}$-Fettalkohol-ethylenoxid-propylenoxid-Adduktes aus 1 Mol Alkohol und 8 Mol Ethylenoxid sowie 4 Mol Propylenoxid mit einem Trübungspunkt in Wasser von 40°C bis 42°C zur Pigmentsuspension, erhitzt durch Einleiten von Dampf auf 98°C und hält diese Temperatur 60 Minuten. Man läßt auf 80°C abkühlen, saugt das Pigment ab und wäscht mit 80°C heißem Wasser. Nach dem Trocknen bei 65°C und dem Mahlen erhält man 149,1 Teile orangefarbenes Pigmentpulver.

Beispiel 2:

Man verfährt wie in Beispiel 1, verwendet jedoch statt der dort eingesetzten Menge 19,0 Teile des genannten nichtionischen Tensids und erhält 142,3 Teile Pigmentpulver.

Beispiel 3:

Man verfährt wie in Beispiel 1, verwendet jedoch statt der dort eingesetzten Menge 12,7 Teile des genannten nichtionischen Tensids und erhält 136,4 Teile Pigmentpulver.

Beispiel 4:

Man verfährt wie in Beispiel 1, verwendet jedoch statt der dort eingesetzten Menge 8,9 Teile des genannten nichtionischen Tensids und erhält 133,1 Teile Pigmentpulver.

Beispiel 5:

Man verfährt wie in Beispiel 1, verwendet jedoch statt der dort eingesetzten Menge 3,8 Teile des genannten nichtionischen Tensids und erhält 128,3 Teile Pigmentpulver.

Beispiele 6 bis 16:

Man verfährt wie in Beispiel 2, verwendet aber statt des dort eingesetzten nichtionischen Tensids die in nachstehender Tabelle angegebenen nichtionischen Tenside.

Man erhält 139,8 bis 142,9 Teile Pigmentpulver.

| Beispiel | Nichtionisches Tensid | Trübungspunkt in Wasser | HLB[1])-Wert |
|---|---|---|---|
| 6 | Blockpolymerisat aus Propylenoxid und Ethylenoxid (ca. 10 Gew.-% EO) | < 20°C | 2 |
| 7 | Blockpolymerisat aus Propylenoxid und Ethylenoxid (ca. 20 Gew.-% EO) | > 35°C | 4 |
| 8 | Blockpolymerisat aus Propylenoxid und Ethylenoxid (ca. 40 Gew.-% EO) | > 55°C | 8 |
| 9 | Fettalkoholpolyglykolether aus ungesättigtem $C_{16}$-$C_{18}$-Alkohol (überwiegend Oleylalkohol) und ca. 8 Mol EO | > 40°C | 11 |
| 10 | Fettalkoholpolyglykolether aus Isotridecylalkohol und ca. 6 Mol EO | > 20°C | 11 |
| 11 | Fettalkoholpolyglykolether aus Isotridecylalkohol und ca. 8 Mol EO | > 45°C | 13 |
| 12 | Tributylphenol-Polyglykolether aus Tributylphenol und ca. 6 Mol EO | < 20°C | 10 |
| 13 | Tributylphenol-Polyglykolether aus Tributylphenol und ca. 11 Mol EO | 42 - 44°C | 13 |

[1]) Hydrophilic Lipophilic Balance; EO bedeutet Ethylenoxid

(fortgesetzt)

| Beispiel | Nichtionisches Tensid | Trübungspunkt in Wasser | HLB[1)]-Wert |
|---|---|---|---|
| 14 | Tributylphenol-Polyglykolether aus Tributylphenol und ca. 13 Mol EO | 62 - 64°C | 14 |
| 15 | Nonylphenolpolyglykolether aus Nonylphenol und ca. 8 Mol EO | 32 - 34°C | 12 |
| 16 | Nonylphenolpolyglykolether aus Nonylphenol und ca. 11 Mol EO | 71 - 74°C | 14 |

[1)] Hydrophilic Lipophilic Balance; EO bedeutet Ethylenoxid

Beispiel 17:

Man verfährt wie in Beispiel 2, verwendet aber kein Cocosalkyldimethylaminoxid. Nach Zudosieren der Suspension der Kupplungskomponente ist noch ein Überschuß an Diazoniumsalz vorhanden, der sich erst nach Zugabe von 1,6 Teilen 1,4-Bis(acetoacetylamino)benzol, gelöst in 30 Volumenteilen 3%iger Natronlauge, umsetzt. Man erhält 141,8 Teile Pigmentpulver.

Beispiel 18:

Man verfährt wie in Beispiel 2, setzt das nichtionische Tensid aber erst vor dem Filtrieren der Pigmentsuspension hinzu. Man erhält 142,6 Teile Pigmentpulver.

Beispiel 19:

67,3 Teile 5-Nitro-2-aminoanisol werden in 120 Volumenteilen 31%iger Salzsäure und 150 Volumenteilen Wasser zwei Stunden bei etwa 22°C gerührt. Es werden 300 Teile Eis zugegeben und innerhalb 15 Minuten werden 57 Volumenteile 38%ige Natriumnitritlösung zugetropft. Es wird zwei Stunden bei 5°C bis 10°C gerührt. Die so erhaltene Diazoniumsalzlösung klärt man durch Filtration und zerstört den Nitritüberschuß durch Amidosulfonsäure.

55,3 Teile 1,4-Bis(acetoacetylamino)benzol werden in 900 Volumenteilen Wasser und 64 Volumenteilen 33%iger Natronlauge gelöst und die Lösung mit 500 Teilen Eis versetzt. Durch Zugabe von 110 Volumenteilen 50%iger Essigsäure innerhalb einer Minute wird die Kupplungskomponente ausgefällt.

In einem Reaktionsgefäß zur Azokupplung werden die Diazoniumsalzlösung, 500 Teile Eis und 12,6 Teile einer 30%igen wäßrigen Lösung eines Cocosalkyldimethylaminoxids vorgelegt, und mit 200 Volumenteilen 4-molarer Natriumacetatlösung wird der pH-Wert auf 4,2 bis 4,4 eingestellt. Diese Mischung wird innerhalb von 45 Minuten mit der Suspension der Kupplungskomponente versetzt.

Nach beendeter Kupplung gibt man 19,0 Teile des in Beispiel 1 verwendeten nichtionischen Tensids zur Pigmentsuspension, erhitzt durch Einleiten von Dampf auf 98°C und hält diese Temperatur 60 Minuten. Man läßt die Reaktionsmischung auf 80°C abkühlen, stellt den pH-Wert mit 55 Teilen 33%iger Natronlauge auf 8 ein und gibt eine 80°C heiße Lösung aus 25,4 Teilen eines disproportionierten Kolophoniumharzes in 200 Volumenteilen Wasser und 16 Teilen 33%iger Natronlauge hinzu, heizt auf 98°C und hält diese Temperatur 15 Minuten. Nach Abkühlen auf 80°C stellt man den pH-Wert mit 80 Volumenteilen 30%iger Salzsäure auf 4,5, saugt das Pigment ab und wäscht mit 80°C heißem Wasser. Nach dem Trocknen bei 65°C und dem Mahlen erhält man 172,8 Teile orangefarbenes Pigmentpulver.

Beispiel 20:

67,3 Teile 5-Nitro-2-aminoanisol werden in 120 Volumenteilen 31%iger Salzsäure und 150 Volumenteilen Wasser zwei Stunden bei etwa 22°C gerührt. Es werden 300 Teile Eis zugegeben und innerhalb 15 Minuten werden 57 Volumenteile 38%ige Natriumnitritlösung zugetropft. Es wird zwei Stunden bei 5°C bis 10°C gerührt. Die so erhaltene Diazoniumsalzlösung klärt man durch Filtration und zerstört den Nitritüberschuß durch Amidosulfonsäure.

55,3 Teile 1,4-Bis(acetoacetylamino)benzol werden in 900 Volumenteilen Wasser und 64 Volumenteilen 33%iger Natronlauge gelöst und die Lösung mit 500 Teilen Eis versetzt.

In einem Reaktionsgefäß zur Azokupplung werden die Diazoniumsalzlösung, 500 Teile Eis und 12,6 Teile einer 30%igen wäßrigen Lösung eines Cocosalkyldimethylaminoxids vorgelegt, und mit 200 Volumenteilen 4-molarer Natriumacetatlösung wird der pH-Wert auf 4,2 bis 4,4 eingestellt. Diese Mischung wird innerhalb von 45 Minuten mit der Lösung der Kupplungskomponente versetzt. Dabei wird der pH-Wert der Reaktionsmischung durch Zugabe von

50%iger Essigsäure bei 4,2 bis 4,4 gehalten. Nach Zudosieren der Suspension der Kupplungskomponente ist noch ein Überschuß an Diazoniumsalz vorhanden, der sich erst nach Zugabe von 1,4 Teilen 1,4-Bis(acetoacetylamino) benzol, gelöst in 30 Volumenteilen 3%iger Natronlauge, umsetzt.

Nach beendeter Kupplung gibt man 19,0 Teile des in Beispiel 1 verwendeten nichtionischen Tensids zur Pigmentsuspension, erhitzt durch Einleiten von Dampf auf 98°C und hält diese Temperatur 60 Minuten. Man läßt die Reaktionsmischung auf 80°C abkühlen, stellt den pH-Wert mit 55 Teilen 33%iger Natronlauge auf 8 ein und gibt eine 80°C heiße Lösung aus 25,4 Teilen eines disproportionierten Kolophoniumharzes in 200 Volumenteilen Wasser und 16 Teilen 33%iger Natronlauge hinzu, heizt auf 98°C und hält diese Temperatur 15 Minuten. Nach Abkühlen auf 80°C stellt man den pH-Wert mit 80 Volumenteilen 30%iger Salzsäure auf 4,5, saugt das Pigment ab und wäscht mit 80°C heißem Wasser. Nach dem Trocknen bei 65°C und dem Mahlen erhält man 174,2 Teile orangefarbenes Pigmentpulver.

Beispiel 21:

67,3 Teile 5-Nitro-2-aminoanisol werden in 120 Volumenteilen 31%iger Salzsäure und 150 Volumenteilen Wasser zwei Stunden bei etwa 22°C gerührt. Es werden 300 Teile Eis zugegeben und innerhalb 15 Minuten werden 57 Volumenteile 38%ige Natriumnitritlösung zugetropft. Es wird zwei Stunden bei 5°C bis 10°C gerührt. Die so erhaltene Diazoniumsalzlösung klärt man durch Filtration und zerstört den Nitritüberschuß durch Amidosulfonsäure.

55,3 Teile 1,4-Bis(acetoacetylamino)benzol werden in 900 Volumenteilen Wasser und 64 Volumenteilen 33%iger Natronlauge gelöst und die Lösung mit 500 Teilen Eis versetzt. Durch Zugabe von 110 Volumenteilen 50%iger Essigsäure innerhalb einer Minute wird die Kupplungskomponente ausgefällt.

In einem Reaktionsgefäß zur Azokupplung werden die Suspension der Kupplungskomponente und 12,6 Teile einer 30%igen wäßrigen Lösung eines Cocosalkyldimethylaminoxids vorgelegt, und mit 10%iger Natronlauge wird der pH-Wert auf 5,9 bis 6,1 eingestellt. Diese Mischung wird innerhalb von 90 Minuten mit der vorstehend genannten Diazoniumsalzlösung versetzt. Eine Stunde nach beendeter Zugabe ist noch ein Überschuß an Diazoniumsalz vorhanden, der sich erst nach Zugabe von 1,5 Teilen 1,4-Bis(acetoacetylamino)benzol, gelöst in 30 Volumenteilen 3%iger Natronlauge, umsetzt.

Nach beendeter Kupplung gibt man 19,0 Teile des in Beispiel 1 verwendeten nichtionischen Tensids zur Pigmentsuspension, erhitzt durch Einleiten von Dampf auf 98°C und hält diese Temperatur 60 Minuten. Man läßt die Reaktionsmischung auf 80°C abkühlen, stellt den pH-Wert mit 33%iger Natronlauge auf 8 ein und gibt eine 80°C heiße Lösung aus 25,4 Teilen eines disproportionierten Kolophoniumharzes in 200 Volumenteilen Wasser und 16 Teilen 33%iger Natronlauge hinzu, heizt auf 98°C und hält diese Temperatur 15 Minuten.
Nach Abkühlen auf 80°C stellt man den pH-Wert mit 30%iger Salzsäure auf 4,5, saugt das Pigment ab und wäscht mit 80°C heißem Wasser. Nach dem Trocknen bei 65°C und dem Mahlen erhält man 167,3 Teile rotstichig gelbes Pigmentpulver.

Beispiel 22:

Man verfährt wie in Beispiel 21, verwendet aber kein Cocosalkyldimethylaminoxid. Eine Stunde nach beendeter Zugabe ist noch ein Überschuß an Diazoniumsalz vorhanden, der sich erst nach Zugabe von 1,9 Teilen 1,4-Bis(acetoacetylamino)benzol, gelöst in 30 Volumenteilen 3%iger Natronlauge, umsetzt.
Man erhält 162,8 Teile eines rotstichig gelben Pigmentpulvers.

Vergleichsbeispiel 1:

Man verfährt wie in Beispiel 1, gibt aber nach der Kupplung kein $C_{12}$-$C_{15}$-Fettalkohol-ethylenoxid-propylenoxid-Addukt zur Pigmentsuspension und erhält 126,2 Teile eines rotstichig gelben Pigmentpulvers.

Vergleichsbeispiel 2:

Von einem nach Vergleichsbeispiel 1 hergestellten Pigment werden 30 Teile in 500 Volumenteilen N-Methyl-2-pyrrolidon (NMP) unter Rühren auf 120°C erhitzt und 3 Stunden bei dieser Temperatur gehalten. Das Pigment wird abgesaugt, mit NMP, danach mit Aceton gewaschen und getrocknet. Nach dem Mahlen erhält man 27,8 Teile eines rotstichig gelben Pigmentpulvers.

Vergleichsbeispiel 3:

Man verfährt wie in Beispiel 19, setzt aber nach beendeter Kupplung kein nichtionisches Tensid zu und erhält 152,6 Teile rotstichig gelbes Pigmentpulver.

Vergleichsbeispiel 4:

Das in der DE-A-24 10 240 (US-PS 3,978,038) in Beispiel 134 beschriebene Pigment wird aus 5-Nitro-2-aminoanisol und 1,4-Bis(acetoacetylamino)benzol in Analogie zu der in Beispiel 1 der besagten Offenlegungsschrift beschriebenen Arbeitsweise hergestellt. Man erhält ein rotstichig gelbes Pigmentpulver.

Beispiel 23:

60,9 Teile 4-Methyl-2-nitroanilin werden in 120 Volumenteilen 31%iger Salzsäure und 150 Volumenteilen Wasser zwei Stunden bei etwa 22°C gerührt. Es werden 300 Teile Eis zugegeben, und innerhalb 15 Minuten werden 57 Volumenteile 38%ige Natriumnitritlösung zugetropft. Es wird zwei Stunden bei 5°C bis 10°C gerührt. Die so erhaltene Diazoniumsalzlösung klärt man durch Filtration und zerstört den Nitritüberschuß durch Amidosulfonsäure.

55,3 Teile 1,4-Bis(acetoacetylamino)benzol werden in 900 Volumenteilen Wasser und 64 Volumenteilen 33%iger Natronlauge gelöst und die Lösung mit 500 Teilen Eis versetzt. Durch Zugabe von 110 Volumenteilen 50%iger Essigsäure innerhalb einer Minute wird die Kupplungskomponente ausgefällt.

In einem Reaktionsgefäß zur Azokupplung werden die Diazoniumsalzlösung, 500 Teile Eis, 18,1 Teile des in Beispiel 1 verwendeten nichtionischen Tensids und 6,0 Teile einer 30%igen wäßrigen Lösung eines Cocosalkyldimethylaminoxids vorgelegt, und mit 200 Volumenteilen 4-molarer Natriumacetatlösung wird der pH-Wert auf 4,2 bis 4,4 eingestellt. Diese Mischung wird innerhalb von 60 Minuten mit der Suspension der Kupplungskomponente versetzt.

Nach beendeter Kupplung erhitzt man durch Einleiten von Dampf auf 98°C und hält diese Temperatur 60 Minuten. Man läßt die Reaktionsmischung auf 80°C abkühlen, stellt den pH-Wert mit 55 Teilen 33%iger Natronlauge auf pH 8 ein und gibt eine 80°C heiße Lösung aus 24,1 Teilen eines disproportionierten Kolophoniumharzes in 200 Volumenteilen Wasser und 16 Teilen 33%iger Natronlauge hinzu, heizt auf 98°C und hält diese Temperatur 15 Minuten. Nach Abkühlen auf 80°C stellt man den pH-Wert mit 80 Volumenteilen 30%iger Salzsäure auf 4,5, saugt das Pigment ab und wäscht mit 80°C heißem Wasser. Nach dem Trocknen bei 65°C und dem Mahlen erhält man 159,3 Teile orangefarbenes Pigmentpulver.

Beispiele 24 bis 27:

Man verfährt wie in Beispiel 23, verwendet aber statt des dort eingesetzten nichtionischen Tensids die folgenden nichtionischen Tenside:

| Beispiel | Nichtionisches Tensid | Trübungspunkt in Wasser | HLB-Wert |
|---|---|---|---|
| 24 | Fettalkoholpolyglykolether aus ungesättigtem $C_{16}$-$C_{18}$-Alkohol (überwiegend Oleylalkohol) und etwa 8 Mol EO | > 40°C | 11 |
| 25 | Tributylphenol-Polyglykolether aus Tributylphenol und etwa 13 Mol EO | 62 - 64°C | 14 |
| 26 | Nonylphenolpolyglykolether aus Nonylphenol und etwa 10 Mol EO | 62 - 65°C | 13 |
| 27 | $C_{12}$-$C_{14}$-Fettalkohol-EO-PO-Addukt aus 1 Mol Alkohol, 12 Mol EO und 15 Mol PO | 26°C | |

PO bedeutet Propylenoxid.

Man erhält 157,8 bis 160,1 Teile Pigmentpulver.

Vergleichsbeispiel 5:

60,9 Teile 4-Methyl-2-nitroanilin werden in 120 Volumenteilen 31%iger Salzsäure und 150 Volumenteilen Wasser zwei Stunden bei etwa 22°C gerührt. Es werden 300 Teile Eis zugegeben und innerhalb 15 Minuten werden 57 Volumenteile 38%ige Natriumnitritlösung zugetropft. Es wird zwei Stunden bei 5°C bis 10°C gerührt. Die so erhaltene Diazoniumsalzlösung klärt man durch Filtration und zerstört den Nitritüberschuß durch Amidosulfonsäure.

55,3 Teile 1,4-Bis(acetoacetylamino)benzol werden in 900 Volumenteilen Wasser und 64 Volumenteilen 33%iger Natronlauge gelöst und die Lösung mit 500 Teilen Eis versetzt. Durch Zugabe von 110 Volumenteilen 50%iger Essigsäure innerhalb einer Minute wird die Kupplungskomponente ausgefällt.

In einem Reaktionsgefäß zur Azokupplung werden die Diazoniumsalzlösung, 500 Teile Eis und 6,0 Teile einer

30%igen wäßrigen Lösung eines Cocosalkyldimethylaminoxids vorgelegt, und mit 200 Volumenteilen 4-molarer Natriumacetatlösung wird der pH-Wert auf 4,2 bis 4,4 eingestellt. Diese Mischung wird innerhalb von 60 Minuten mit der Suspension der Kupplungskomponente versetzt.

Nach beendeter Kupplung erhitzt man durch Einleiten von Dampf auf 98°C und hält diese Temperatur 60 Minuten. Nach Abkühlen auf 80°C saugt man das Pigment ab und wäscht mit 80°C heißem Wasser. Nach dem Trocknen bei 65°C und dem Mahlen erhält man 119,2 Teile rotstichig gelbes Pigmentpulver.

Vergleichsbeispiel 6:

Aus 4-Methyl-2-nitroanilin und 1,4-Bis(acetoacetylamino)benzol wird das in der DE-A-23 36 915 (AU 74/71369) im Beispiel 1 beschriebene Pigment hergestellt.

Vergleichsbeispiel 7:

Aus 4-Methyl-2-nitroanilin und 1,4-Bis(acetoacetylamino)benzol wird das in der DE-A-23 36 915 (AU 74/71369) im Beispiel 2 beschriebene Pigment hergestellt.

Beispiel 28:

Man verfährt wie in Beispiel 2, verwendet jedoch 4-Nitro-2-aminoanisol statt 5-Nitro-2-aminoanisol und erhält 144,0 Teile gelbes Pigmentpulver.

Vergleichsbeispiel 8:

Man verfährt wie in Beispiel 28, setzt jedoch kein nichtionisches Tensid zu und erhält 126,1 Teile gelbes Pigmentpulver.

Beispiel 29:

59,7 Teile 5-Aminobenzimidazol-2-on werden in 400 Volumenteilen Essigsäure und 120 Volumenteilen 31%iger Salzsäure zwei Stunden bei etwa 22°C gerührt. Es werden 300 Teile Eis zugegeben und innerhalb 15 Minuten werden 57 Volumenteile 38%ige Natriumnitritlösung zugetropft. Es wird zwei Stunden bei 5°C bis 10°C gerührt. Die so erhaltene Diazoniumsalzlösung klärt man durch Filtration und zerstört den Nitritüberschuß durch Amidosulfonsäure.

55,3 Teile 1,4-Bis(acetoacetylamino)benzol werden in 900 Volumenteilen Wasser und 64 Volumenteilen 33%iger Natronlauge gelöst und die Lösung mit 500 Teilen Eis versetzt. Durch Zugabe von 110 Volumenteilen 50%iger Essigsäure innerhalb einer Minute wird die Kupplungskomponente ausgefällt.

In einem Reaktionsgefäß zur Azokupplung werden die Suspension der Kupplungskomponente und 25,2 Teile einer 30%igen wäßrigen Lösung eines Cocosalkyldimethylaminoxids vorgelegt, und mit 10%iger Natronlauge wird der pH-Wert auf 6,5 eingestellt. Diese Mischung wird innerhalb von 2 Stunden mit der oben erwähnten Diazoniumsalzlösung versetzt, wobei der pH-Wert durch Zugabe von 10%iger Natronlauge bei pH 6,5 bis 7,0 gehalten wird. Eine Stunde nach beendeter Zugabe ist noch ein Überschuß an Diazoniumsalz vorhanden, der sich erst nach Zugabe von 1,7 Teilen 1,4-Bis(acetoacetylamino)benzol, gelöst in 30 Volumenteilen 3%iger Natronlauge, umsetzt.

Nach beendeter Kupplung gibt man 17,9 Teile des in Beispiel 1 verwendeten nichtionischen Tensids zur Pigmentsuspension, erhitzt durch Einleiten von Dampf auf 98°C und hält diese Temperatur 60 Minuten. Man läßt die Reaktionsmischung auf 80°C abkühlen, stellt den pH-Wert mit 33%iger Natronlauge auf pH 8 ein und gibt eine 80°C heiße Lösung aus 23,8 Teilen eines disproportionierten Kolophoniumharzes in 200 Volumenteilen Wasser und 16 Teilen 33%iger Natronlauge hinzu, heizt auf 98°C und hält diese Temperatur 15 Minuten.

Nach Abkühlen auf 80°C stellt man den pH-Wert mit 30%iger Salzsäure auf 4,5, saugt das Pigment ab und wäscht mit 80°C heißem Wasser. Nach dem Trocknen bei 65°C und dem Mahlen erhält man 156,6 Teile orangefarbenes Pigmentpulver.

Vergleichsbeispiel 9:

Man verfährt wie in Beispiel 29, setzt jedoch kein nichtionisches Tensid zu und erhält 115,8 Teile braungelbes Pigmentpulver.

Beispiel 30:

83,6 Teile 2-Aminoterephthalsäuredimethylester werden in 120 Volumenteilen 31%iger Salzsäure, 90 Volumenteilen Essigsäure und 60 Volumenteilen Wasser zwei Stunden bei etwa 22°C gerührt. Es werden 50 Teile Eis zugegeben und innerhalb 15 Minuten werden 57 Volumenteile 38%ige Natriumnitritlösung zugetropft. Es wird zwei Stunden bei 0°C bis 5°C gerührt (Außenkühlung). Die so erhaltene Diazoniumsalzlösung klärt man durch Filtration und zerstört den Nitritüberschuß durch Amidosulfonsäure.

55,3 Teile 1,4-Bis(acetoacetylamino)benzol werden in 900 Volumenteilen Wasser und 64 Volumenteilen 33%iger Natronlauge gelöst und die Lösung mit 500 Teilen Eis versetzt. Durch Zugabe von 110 Volumenteilen 50%iger Essigsäure innerhalb einer Minute wird die Kupplungskomponente ausgefällt.

In einem Reaktionsgefäß zur Azokupplung werden die Diazoniumsalzlösung, 500 Teile Eis und 14,2 Teile einer 30%igen wäßrigen Lösung eines Cocosalkyldimethylaminoxids vorgelegt, und mit 200 Volumenteilen 4-molarer Natriumacetatlösung wird der pH-Wert auf 4,2 bis 4,4 eingestellt. Diese Mischung wird innerhalb von 45 Minuten mit der Suspension der Kupplungskomponente versetzt.

Nach beendeter Kupplung gibt man 21,4 Teile des in Beispiel 1 verwendeten nichtionischen Tensids zur Pigmentsuspension, erhitzt durch Einleiten von Dampf auf 98°C und hält diese Temperatur 2 Stunden. Nach Abkühlen auf 80°C saugt man das Pigment ab und wäscht mit 80°C heißem Wasser. Nach dem Trocknen bei 65°C und dem Mahlen erhält man 156,6 Teile gelbes Pigmentpulver.

Vergleichsbeispiel 10:

Aus 2-Aminoterephthalsäuredimethylester und 1,4-Bis(acetoacetylamino)benzol wird ein Pigment auf die in der DE-A-40 39 590 (GB-A-22 39 254) im Beispiel 1 beschriebenen Weise hergestellt.

Beispiel 31:

78,4 Teile 4-Amino-3-nitrobenzoesäuremethylester werden in 640 Volumenteilen Essigsäure und 120 Volumenteilen 31%iger Salzsäure zwei Stunden bei etwa 22°C gerührt. Bei 5°C bis 10°C (Außenkühlung) werden innerhalb 15 Minuten
57 Volumenteile 38%ige Natriumnitritlösung zugetropft. Es wird zwei Stunden bei 5°C bis 10°C gerührt. Die so erhaltene Diazoniumsalzlösung klärt man durch Filtration und zerstört den Nitritüberschuß durch Amidosulfonsäure.

55,3 Teile 1,4-Bis(acetoacetylamino)benzol werden in 900 Volumenteilen Wasser und 64 Volumenteilen 33%iger Natronlauge gelöst und die Lösung mit 500 Teilen Eis versetzt.

In einem Reaktionsgefäß zur Azokupplung werden die Diazoniumsalzlösung, 500 Teile Eis und 12,6 Teile einer 30%igen wäßrigen Lösung eines Cocosalkyldimethylaminoxids vorgelegt. Diese Mischung wird innerhalb von 35 Minuten mit der Lösung der Kupplungskomponente versetzt. Anschließend wird der pH-Wert der Reaktionsmischung durch Zugabe von 4-molarer Natriumacetatlösung auf pH 3,9 eingestellt.

Nach beendeter Kupplung gibt man 20,7 Teile des in Beispiel 1 verwendeten nichtionischen Tensids zur Pigmentsuspension, erhitzt durch Einleiten von Dampf auf 98°C und hält diese Temperatur 60 Minuten. Nach Abkühlen auf 80°C saugt man das Pigment ab und wäscht mit 80°C heißem Wasser. Nach dem Trocknen bei 65°C und dem Mahlen erhält man 159,1 Teile gelbes Pigmentpulver.

Vergleichsbeispiel 11:

Aus 4-Amino-3-nitrobenzoesäuremethylester und 1,4-Bis(acetoacetylamino)benzol wird das in EP-A-25 164 (CA-A- 11 35 688), Beispiel 3 beschriebene Pigment nach der in Beispiel 1 dieser Druckschrift angegebenen Arbeitsweise hergestellt.

Vergleichsbeispiel 12:

Man verfährt wie in Vergleichsbeispiel 11, verzichtet jedoch auf die Nachbehandlung des Pigmentpreßkuchens in Dimethylformamid.

Vergleichsbeispiel 13:

Man verfährt wie in Beispiel 31, gibt nach beendeter Kupplung jedoch kein nichtionisches Tensid zu und erhält nach dem Trocknen und Mahlen 135,7 Teile eines gelben Pigments.

Beispiel 32:

54,5 Teile 4-Aminobenzamid werden in 800 Volumenteilen Wasser und 112 Volumenteilen 31%iger Salzsäure zwei Stunden bei etwa 22°C gerührt. Nach Zugabe von 140 Teilen Eis werden innerhalb 15 Minuten 57 Volumenteile 38%ige Natriumnitritlösung zugetropft. Es wird zwei Stunden bei 5°C bis 10°C gerührt. Die so erhaltene Diazoniumsalzlösung klärt man durch Filtration und zerstört den Nitritüberschuß durch Amidosulfonsäure.

55,3 Teile 1,4-Bis(acetoacetylamino)benzol werden in 900 Volumenteilen Wasser und 64 Volumenteilen 33%iger Natronlauge gelöst und die Lösung mit 500 Teilen Eis versetzt. Durch Zugabe von 110 Volumenteilen 50%iger Essigsäure innerhalb einer Minute wird die Kupplungskomponente ausgefällt.

In einem Reaktiongefäß zur Azokupplung werden die Diazoniumsalzlösung, 200 Teile Eis, 300 Teile Wasser und 12,6 Teile einer 30%igen wäßrigen Lösung eines Cocosalkyldimethylaminoxids vorgelegt, und mit 4-molarer Natriumacetatlösung wird der pH-Wert auf 4,2 bis 4,4 eingestellt. Diese Mischung wird innerhalb von 2 Stunden mit der Suspension der Kupplungskomponente versetzt. Man läßt 30 Minuten bei 20°C und nach Aufheizen auf 40°C noch weitere 30 Minuten rühren.

Nach beendeter Kupplung gibt man 17,1 Teile des in Beispiel 1 verwendeten nichtionischen Tensids zur Pigmentsuspension, erhitzt durch Einleiten von Dampf auf 98°C und hält diese Temperatur eine Stunde. Nach Abkühlen auf 80°C saugt man das Pigment ab und wäscht mit 80°C heißem Wasser. Nach dem Trocknen bei 65°C und dem Mahlen erhält man 126,4 Teile eines grünstichig gelben Pigments.

Vergleichsbeispiel 14:

Man verfährt wie in Beispiel 32, setzt jedoch kein nichtionisches Tensid zu und erhält 110,2 Teile grünstichig gelbes Pigmentpulver.

Beispiel 33:

76,0 Teile 2-Aminoterephthalsäuredimethylester und 6,1 Teile Anthranilsäuremethylester werden in 100 Volumenteilen 31%iger Salzsäure und 10 Volumenteilen Wasser vier Stunden bei etwa 22°C gerührt. Durch Außenkühlung und Zugabe von 125 Teilen Eis wird auf 0°C gekühlt und innerhalb 15 Minuten werden 57 Volumenteile 38%ige Natriumnitritlösung zugetropft. Es wird zwei Stunden bei 0°C bis 5°C gerührt. Die so erhaltene Diazoniumsalzlösung klärt man durch Filtration und zerstört den Nitritüberschuß durch Amidosulfonsäure.

55,3 Teile 1,4-Bis(acetoacetylamino)benzol werden in 900 Volumenteilen Wasser und 64 Volumenteilen 33%iger Natronlauge gelöst und die Lösung mit 500 Teilen Eis versetzt. Durch Zugabe von 110 Volumenteilen 50%iger Essigsäure innerhalb einer Minute wird die Kupplungskomponente ausgefällt.

In einem Reaktionsgefäß zur Azokuplung werden die Diazoniumsalzlösung, 500 Teile Eis und 12,6 Teile einer 30%igen wäßrigen Lösung eines Cocosalkyldimethylaminoxids vorgelegt, und mit 200 Volumenteilen 4-molarer Natriumacetatlösung wird der pH-Wert auf 4,2 bis 4,4 eingestellt. Diese Mischung wird innerhalb von 45 Minuten mit der Suspension der Kupplungskomponente versetzt.

Nach beendeter Kupplung gibt man 21,4 Teile des in Beispiel 1 verwendeten nichtionischen Tensids zur Pigmentsuspension, erhitzt durch Einleiten von Dampf auf 98°C und hält diese Temperatur 120 Minuten. Nach Abkühlen auf 80°C saugt man das Pigment ab und wäscht mit 80°C heißem Wasser. Nach dem Trocknen bei 65°C und dem Mahlen erhält man 158,6 Teile gelbes Pigmentpulver.

Vergleichsbeispiel 15:

Aus 2-Aminoterephthalsäuredimethylester, Anthranilsäuremethylester und 1,4-Bis(acetoacetylamino)benzol wird das Pigment gemäß dem in der DE-A-35 01 199 (US-PS 5 030 247) angegebenen Beispiel hergestellt, ohne das Rohpigment in einem organischen Lösungsmittel nachzubehandeln.

Vergleichsbeispiel 16:

30,0 Teile des Pigments aus Vergleichsbeispiel 15 werden in 600 Volumenteilen Dimethylformamid auf 150°C erhitzt und 2 Stunden bei dieser Temperatur gehalten. Nach dem Abkühlen auf 80°C wird das Pigment abgesaugt, mit Dimethylformamid und dann mit Ethanol gewaschen, getrocknet und gemahlen. Es werden 26,4 Teile eines gelben Pigments erhalten.

Beispiel 34:

Man verfährt wie in Beispiel 2, verwendet jedoch statt 67,3 Teilen 5-Nitro-2-aminoanisol ein Gemisch aus 60,6 Teilen 5-Nitro-2-aminoanisol und 6,1 Teilen 4-Methyl-2-nitroanilin und erhält 141,1 Teile eines orangefarbenen Pigments.

Vergleichsbeispiel 17:

Man verfährt wie in Vergleichsbeispiel 1, verwendet jedoch statt 67,3 Teilen 5-Nitro-2-aminoanisol ein Gemisch aus 60,6 Teilen 5-Nitro-2-aminoanisol und 6,1 Teilen 4-Methyl-2-nitroanilin und erhält 125,7 Teile eines rotstichig gelben Pigments.

Beispiel 35:

Man verfährt wie in Beispiel 2, verwendet jedoch statt 55,3 Teilen 1,4-Bis(acetoacetylamino)benzol ein Gemisch aus 49,7 Teilen 1,4-Bis(acetoacetylamino)benzol und 6,1 Teilen 2,5-Dimethyl-1,4-bis(acetoacetylamino)benzol und erhält 142,4 Teile eines orangefarbenen Pigments.

Vergleichsbeispiel 18:

Man verfährt wie in Vergleichsbeispiel 1, verwendet jedoch statt 55,3 Teilen 1,4-Bis(acetoacetylamino)benzol ein Gemisch aus 49,7 Teilen 1,4-Bis(acetoacetylamino)benzol und 62,1 Teile 2,5-Dimethyl-1,4-bis(acetoacetylamino)benzol und erhält 126,1 Teile eines orangefarbenen Pigments.

Beispiel 36:

Man verfährt wie in Beispiel 2, verwendet jedoch statt 55,3 Teilen 1,4-Bis(acetoacetylamino)benzol 62,1 Teile 2-Chlor-1,4-bis(acetoacetylamino)benzol und erhält 131,8 Teile eines rotstichig gelben Pigments.

Vergleichsbeispiel 19:

Man verfährt wie in Vergleichsbeispiel 1, verwendet jedoch statt 55,3 Teilen 1,4-Bis(acetoacetylamino)benzol 62,1 Teile 2-Chlor-1,4-bis(acetoacetylamino)benzol und erhält 131,8 Teile eines braungelben Pigments.

Vergleichsbeispiel 20:

30,0 Teile des Pigments aus Vergleichsbeispiel 19 werden in 600 Volumenteilen Dimethylformamid auf 150°C erhitzt und 30 Minuten bei dieser Temperatur gehalten. Nach Abkühlen auf 80°C wird das Pigment abgesaugt, mit Dimethylformamid und dann mit Ethanol gewaschen, getrocknet und gemahlen. Es werden 23,6 Teile eines rotstichig gelben Pigments erhalten.

Beispiel 37:

54,5 Teile 4-Aminobenzamid werden in 800 Volumenteilen Wasser und 112 Volumenteilen 31%iger Salzsäure zwei Stunden bei etwa 22°C gerührt. Nach Zugabe von 140 Teilen Eis werden innerhalb von 15 Minuten 57 Volumenteile 38%ige Natriumnitritlösung zugetropft. Es wird zwei Stunden bei 5°C bis 10°C gerührt. Die so erhaltene Diazoniumsalzlösung klärt man durch Filtration und zerstört den Nitritüberschuß durch Amidosulfonsäure.

62,1 Teile 2-Chlor-1,4-bis(acetoacetylamino)benzol werden in 900 Volumenteilen Wasser und 64 Volumenteilen 33%iger Natronlauge gelöst und die Lösung mit 500 Teilen Eis versetzt.

In einem Reaktionsgefäß zur Azokupplung werden die Diazoniumsalzlösung, 200 Teile Eis, 300 Teile Wasser und 12,6 Teile einer 30%igen wäßrigen Lösung eines Cocosalkyldimethylaminoxids vorgelegt, und mit 4-molarer Natriumacetatlösung wird der pH-Wert auf 4,2 bis 4,4 eingestellt. Diese Mischung wird innerhalb von 2 Stunden mit der Lösung der Kupplungskomponente versetzt. Man läßt 30 Minuten bei 20°C und nach Aufheizen auf 40°C noch weitere 30 Minuten rühren.

Nach beendeter Kupplung gibt man 17,6 Teile des in Beispiel 1 verwendeten nichtionischen Tensids zur Pigmentsuspension, erhitzt durch Einleiten von Dampf auf 98°C und hält diese Temperatur eine Stunde.

Nach Abkühlen auf 80°C saugt man das Pigment ab und wäscht mit 80°C heißem Wasser. Nach dem Trocknen

bei 65°C und dem Mahlen erhält man 134,8 Teile eines grünstichig gelben Pigments.

Vergleichsbeispiel 21:

Man verfährt wie in Beispiel 37, gibt nach beendeter Kupplung jedoch kein nichtionisches Tensid zu und erhält nach dem Trocknen und Mahlen 116,4 Teile eines grünstichig gelben Pigments.

Vergleichsbeispiel 22:

30,0 Teile des Pigments aus Vergleichsbeispiel 21 werden in 600 Volumenteilen Dimethylformamid auf 150°C erhitzt und 10 Minuten bei dieser Temperatur gehalten. Nach Abkühlen auf 80°C wird das Pigment abgesaugt, mit Dimethylformamid und dann mit Ethanol gewaschen, getrocknet und gemahlen. Es werden 22,0 Teile eines grünstichig gelben Pigments erhalten.

Beispiel 38:

83,6 Teile 2-Aminoterephthalsäuredimethylester werden in 120 Volumenteilen 31%iger Salzsäure, 90 Volumenteilen Essigsäure und 60 Volumenteilen Wasser zwei Stunden bei etwa 22°C gerührt. Es werden 50 Teile Eis zugegeben und innerhalb 15 Minuten werden 57 Volumenteile 38%ige Natriumnitritlösung zugetropft. Es wird zwei Stunden bei 0°C bis 5°C gerührt (Außenkühlung). Die so erhaltene Diazoniumsalzlösung klärt man durch Filtration und zerstört den Nitritüberschuß durch Amidosulfonsäure.
62,1 Teile 2-Chlor-1,4-bis(acetoacetylamino)benzol werden in 900 Volumenteilen Wasser und 64 Volumenteilen 33%iger Natronlauge gelöst und die Lösung mit 500 Teilen Eis versetzt.

In einem Reaktionsgefäß zur Azokupplung werden die Diazoniumsalzlösung, 200 Teile Eis, 300 Teile Wasser und 12,6 Teile einer 30%igen wäßrigen Lösung eines Cocosalkyldimethylaminoxids vorgelegt, und mit 4-molarer Natriumacetatlösung wird der pH-Wert auf 4,2 bis 4,4 eingestellt. Diese Mischung wird innerhalb von 2 Stunden mit der Lösung der Kupplungskomponente versetzt.

Nach beendeter Kupplung gibt man 22,5 Teile des in Beispiel 1 verwendeten nichtionischen Tensids zur Pigmentsuspension, erhitzt durch Einleiten von Dampf auf 98°C und hält diese Temperatur eine Stunde. Nach Abkühlen auf 80°C saugt man das Pigment ab und wäscht mit 80°C heißem Wasser. Nach dem Trocknen bei 65°C und dem Mahlen erhält man 169,7 Teile eines grünstichig gelben Pigments.

Vergleichsbeispiel 23:

Man verfährt wie in Beispiel 38, gibt nach beendeter Kupplung jedoch kein nichtionisches Tensid zu und erhält nach dem Trocknen und Mahlen 148,1 Teile eines grünstichig gelben Pigments.

Beispiel 39:

54,8 Teile Anthranilsäure werden in 800 Volumenteilen Wasser und
112 Volumenteilen 31%iger Salzsäure zwei Stunden bei etwa 22°C gerührt. Nach Zugabe von 140 Teilen Eis werden innerhalb von 15 Minuten 57 Volumenteile 38%ige Natriumnitritlösung zugetropft. Es wird eine Stunde bei 5°C bis 10°C gerührt. Die so erhaltene Diazoniumsalzlösung klärt man durch Filtration und zerstört den Nitritüberschuß durch Amidosulfonsäure.

55,3 Teile 1,4-Bis(acetoacetylamino)benzol werden in 900 Volumenteilen Wasser und 64 Volumenteilen 33%iger Natronlauge gelöst und die Lösung mit 500 Teilen Eis versetzt. Durch Zugabe von 110 Volumenteilen 50%iger Essigsäure innerhalb einer Minute wird die Kupplungskomponente ausgefällt.

In einem Reaktionsgefäß zur Azokupplung werden die Diazoniumsalzlösung, 200 Teile Eis, 300 Teile Wasser und 12,6 Teile einer 30%igen wäßrigen Lösung eines Cocosalkyldimethylaminoxids vorgelegt, und mit 4-molarer Natriumacetatlösung wird der pH-Wert auf 4,2 bis 4,4 eingestellt. Diese Mischung wird innerhalb von 2 Stunden mit der Suspension der Kupplungskomponente versetzt.

Nach beendeter Kupplung gibt man 17,2 Teile des in Beispiel 1 verwendeten nichtionischen Tensids zur Pigmentsuspension, erhitzt durch Einleiten von Dampf auf 98°C und hält diese Temperatur eine Stunde. Nach Abkühlen auf 80°C saugt man das Pigment ab und wäscht mit 80°C heißem Wasser. Nach dem Trocknen bei 65°C und dem Mahlen erhält man 127,3 Teile eines gelben Pigments.

Vergleichsbeispiel 24:

Man verfährt wie in Beispiel 39, gibt nach beendeter Kupplung jedoch kein nichtionisches Tensid zu und erhält nach dem Trocknen und Mahlen 113,1 Teile eines gelben Pigments.

Vergleichsbeispiel 25:

40,0 Teile des Pigments aus Vergleichsbeispiel 24 werden in 600 Volumenteilen Dimethylformamid auf 135°C erhitzt und 60 Minuten bei dieser Temperatur gehalten. Nach Abkühlen auf 80°C wird das Pigment abgesaugt, mit Dimethylformamid und dann mit Ethanol gewaschen, getrocknet und gemahlen. Es werden 32,7 Teile eines gelben Pigments erhalten.

Beispiel 40:

Aus 83,3 Teilen 3-Amino-4-methoxybenzoesäureisopropylamid und 55,3 Teilen 1,4-Bis(acetoacetylamino)benzol wird in Analogie zu Beispiel 1 das entsprechende Pigment hergestellt, wobei 21,4 Teile des nichtionischen Tensids verwendet werden. Man erhält 162,8 Teile eines grünstichig gelben Pigments.

Vergleichsbeispiel 26:

Man verfährt wie in Beispiel 40, gibt nach beendeter Kupplung jedoch kein nichtionisches Tensid zu und erhält nach dem Trocknen und Mahlen 138,8 Teile eines grünstichig gelben Pigments.

Vergleichsbeispiel 27:

40,0 Teile des Pigments aus Vergleichsbeispiel 26 werden in 600 Volumenteilen Dimethylformamid auf 135°C erhitzt und 90 Minuten bei dieser Temperatur gehalten. Nach Abkühlen auf 80°C wird das Pigment abgesaugt, mit Dimethylformamid und dann mit Ethanol gewaschen, getrocknet und gemahlen. Es werden 34,1 Teile eines grünstichig gelben Pigments erhalten.

Beispiel 41:

Aus 64,8 Teilen 2,4-Dichloranilin und 55,3 Teilen 1,4-Bis(acetoacetylamino)benzol wird in Analogie zu Beispiel 1 das entsprechende Pigment hergestellt, wobei 18,7 Teile des nichtionischen Tensids verwendet werden. Man erhält 141,1 Teile eines grünstichig gelben Pigments.

Vergleichsbeispiel 28:

Man verfährt wie in Beispiel 41, gibt nach beendeter Kupplung jedoch kein nichtionisches Tensid zu und erhält nach dem Trocknen und Mahlen 122,2 Teile eines grünstichig gelben Pigments.

Vergleichsbeispiel 29:

30,0 Teile des Pigments aus Vergleichsbeispiel 28 werden in 600 Volumenteilen Dimethylformamid auf 125°C erhitzt und 15 Minuten bei dieser Temperatur gehalten. Nach Abkühlen auf 80°C wird das Pigment abgesaugt, mit Dimethylformamid und dann mit Ethanol gewaschen, getrocknet und gemahlen. Es werden 24,2 Teile eines grünstichig gelben Pigments erhalten.

Vergleichsbeispiel 30:

Aus 2,4-Dichloranilin, Anilin-2,5-disulfonsäure und 1,4 Bis(acetoacetylamino)benzol wird das im Beispiel 24 der DE-A-2135468 (US-PS 3 759 733) beschriebene Pigment auf die dort angegebene Arbeitsweise hergestellt.

Beispiel 42:

69,0 Teile 2-Chlor-4-nitroanilin werden auf die in Beispiel 1 für 5-Nitro-2-aminoanisol beschriebene Weise diazotiert.

55,3 Teile 1,4-Bis(acetoacetylamino)benzol werden in 900 Volumenteilen Wasser und 64 Volumenteilen 33%iger

Natronlauge gelöst und mit 19,3 Teilen des in Beispiel 1 verwendeten nichtionischen Tensids versetzt.

In einem Reaktionsgefäß zur Azokupplung werden die Diazoniumsalzlösung, 400 Teile Eis, 300 Teile Wasser und 12,6 Teile einer 30%igen wäßrigen Lösung eines Cocosalkyldimethylaminoxids vorgelegt, und mit 4-normaler Natriumacetatlösung wird der pH-Wert auf 3,5 eingestellt. Diese Mischung wird innerhalb von 45 Minuten mit der Lösung der Kupplungskomponente versetzt.

Nach beendeter Kupplung erhitzt man durch Einleiten von Dampf auf 98°C und hält diese Temperatur zwei Stunden.

Nach Abkühlen auf 80°C saugt man das Pigment ab und wäscht mit 80°C heißem Wasser. Nach dem Trocknen bei 65°C und dem Mahlen erhält man erhält 144,7 Teile Pigment.

Vergleichsbeispiel 31:

Das in der DE-A-2410240 (US-PS 3 978 038) in Beispiel 1 beschriebene Pigment wird aus 69,0 Teilen 2-Chlor-4-nitroanilin und 55,3 Teilen 1,4-Bis(acetoacetylamino)benzol hergestellt. Man erhält 120,2 Teile Pigment. 25 Teile dieses Pigments werden wie in Beispiel 1 der DE-A-2410240 (US-PS 3 978 038) in 670 Volumenteilen Dimethylformamid 2 Stunden bei 140-150°C gerührt, filtriert, mit heißem Dimethylformamid, dann mit Methanol und schließlich mit heißem Wasser gewaschen. Nach dem Trocknen und Mahlen erhält man 22,7 Teile Pigmentpulver.

Beispiel 43:

60,0 Teile 4-Aminoacetanilid werden auf die in Beispiel 1 für 5-Nitro-2-aminoanisol beschriebene Weise diazotiert.

55,3 Teile 1,4-Bis(acetoacetylamino)benzol werden in 900 Volumenteilen Wasser und 64 Volumenteilen 33%iger Natronlauge gelöst, mit 500 Teilen Eis und 24,0 Teilen des in Beispiel 1 verwendeten nichtionischen Tensids versetzt.

In einem Reaktionsgefäß zur Azokupplung werden die Diazoniumsalzlösung, 500 Teile Eis, 300 Teile Wasser und 12,6 Teile einer 30%igen wäßrigen Lösung eines Cocosalkyldimethylaminoxids vorgelegt, und mit 4-normaler Natriumacetatlösung wird der pH-Wert auf 4,4 eingestellt. Diese Mischung wird innerhalb von 45 Minuten mit der Lösung der Kupplungskomponente versetzt. Nach beendeter Kupplung erhitzt man durch Einleiten von Dampf auf 98°C und hält diese Temperatur vier Stunden. Nach Abkühlen auf 80°C saugt man das Pigment ab und wäscht mit 80°C heißem Wasser. Nach dem Trocknen bei 65°C und dem Mahlen erhält man 140,8 Teile Pigment.

Vergleichsbeispiel 32:

Man verfährt wie in Beispiel 43, setzt aber nach beendeter Kupplung kein nichtionisches Tensid zu und erhält 117,9 Teile Pigmentpulver.

Beispiel 44:

Man verfährt wie in Beispiel 37, verwendet jedoch statt 62,1 Teilen 2-Chlor-1,4-bis(acetoacetylamino)benzol 69,0 Teile 2,5-Dichlor-1,4-bis(acetoacetylamino)benzol und statt 17,6 Teilen 25,4 Teile des nichtionischen Tensids. Man erhält 147,4 Teile eines grünstichig gelben Pigments.

Vergleichsbeispiel 33:

Man verfährt wie in Beispiel 44, setzt aber nach beendeter Kupplung kein nichtionisches Tensid zu und erhält 124,9 Teile Pigmentpulver.

Vergleichsbeispiel 34:

30,0 Teile des Pigments aus Vergleichsbeispiel 33 werden in 600 Volumenteilen Dimethylformamid auf 150°C erhitzt und 45 Minuten bei dieser Temperatur gehalten. Nach Abkühlen auf 80°C wird das Pigment abgesaugt, mit Dimethylformamid und dann mit Ethanol gewaschen, getrocknet und gemahlen. Es werden 27,1 Teile eines grünstichig gelben Pigments erhalten.

Beispiel 45:

96,9 Teile 3-Amino-4-methoxybenzanilid werden auf die in Beispiel 39 für Anthranilsäure beschriebene Weise diazotiert.

Man verfährt weiter wie in Beispiel 39, verwendet jedoch 23,5 Teile des nichtionischen Tensids und erhält 172,8

Teile eines gelben Pigments.

Vergleichsbeispiel 35:

Man verfährt wie in Beispiel 45, verwendet jedoch kein nichtionisches Tensid und erhält 153,4 Teile eines gelben Pigments.

Beispiel 46:

Man verfährt wie in Beispiel 45, verwendet jedoch 60,5 Teile Anthranilsäuremethylester statt 96,9 Teilen 3-Amino-4-methoxybenzanilid und 18,0 statt 23,5 Teilen des nichtionischen Tensids und erhält 133,7 Teile eines gelben Pigments.

Vergleichsbeispiel 36:

Man verfährt wie in Beispiel 46, verwendet jedoch kein nichtionisches Tensid und erhält 118,1 Teile eines gelben Pigments.

Beispiel 47:

96,0 Teile 2-(4-Aminophenyl)-6-methylbenzothiazol werden in 120 Volumenteilen 31%iger Salzsäure und 200 Volumenteilen Eisessig zwei Stunden bei etwa 22°C gerührt. Es werden 1000 Volumenteile Wasser und 300 Teile Eis zugegeben und innerhalb von 15 Minuten werden 57 Volumenteile 38%ige Natriumnitritlösung zugetropft. Es wird zwei Stunden bei 5°C bis 10°C nachgerührt. Die so erhaltene Diazoniumsalzlösung klärt man durch Filtration und zerstört den Nitritüberschuß durch Amidosulfonsäure.

55,3 Teile 1,4-Bis(acetoacetylamino)benzol werden in 900 Volumenteilen Wasser und 64 Volumenteilen 33%iger Natronlauge gelöst und die Lösung mit 500 Teilen Eis versetzt. Durch Zugabe von 110 Volumenteilen 50%iger Essigsäure innerhalb einer Minute wird die Kupplungskomponente ausgefällt.

In einem Reaktionsgefäß zur Azokupplung werden die Diazoniumsalzlösung, 500 Teile Eis und 15,6 Teile einer 30%igen wäßrigen Lösung eines Cocosalkyldimethylaminoxids vorgelegt, und mit etwa 200 Volumenteilen 4-normaler Natriumacetatlösung wird der pH-Wert auf 4,0 eingestellt. Diese Mischung wird innerhalb von 45 Minuten mit der Suspension der Kupplungskomponente versetzt.

Nach beendeter Kupplung gibt man 23,3 Teile eines $C_{12}$-$C_{15}$-Fettalkohol-ethylenoxid-propylenoxid-Adduktes aus 1 Mol Alkohol und 8 Mol Ethylenoxid sowie 4 Mol Propylenoxid mit einem Trübungspunkt in Wasser von 40 bis 42°C zur Pigmentsuspension, erhitzt durch Einleiten von Dampf auf 98°C und hält diese Temperatur 60 Minuten. Man läßt auf 80°C abkühlen, saugt das Pigment ab und wäscht mit 80°C heißem Wasser. Nach dem Trocknen bei 65°C und dem Mahlen erhält man 173,7 Teile rotstichig gelbes Pigmentpulver.

Vergleichsbeispiel 37:

Man verfährt wie in Beispiel 47, setzt aber nach beendeter Kupplung kein nichtionisches Tensid zu und erhält 152,1 Teile gelbes Pigmentpulver.

Färbebeispiele:

Herstellung von Tiefdruckfarben im Paint Shaker und anschließender Applikation auf einen Druckträger.

1. Firnis

| | |
|---|---|
| 30,0 % | Collodiumwolle A 400 (65% Ethanol feucht) |
| 4,0 % | Weichmacher, beispielsweise ®Genomoll 140 (Dibutylphthalat) |
| 8,0 % | Methoxypropanol |
| 58,0 % | Ethanol (wasserfrei) |
| 100,0 % | (Feststoffgehalt 23,5 %) |

2. Lösemittelgemisch:

| | |
|---|---|
| 50 % | Ethanol |
| 50 % | Ethylacetat |

Von Probe und Vergleich werden je 2 Farben nach folgendem Verfahren hergestellt:
In einem 150 ml Plastikbecher mit Steckdeckel werden 113 g Glaskugeln (2 mm Durchmesser) eingefüllt und

| | |
|---|---|
| 5,4 g | Pigment |
| 15,0 g | Nitrocellulose (NC)-Firnis (1.) |
| 15,6 g | Lösemittelgemisch (2.) |
| 36,0 g | eingewogen (15 %iger Mahlgutansatz). |

Jeweils 2 Becher mit Probe und Vergleich werden gleichzeitig mit der Schüttelmaschine 30 Minuten lang dispergiert.

3. Anschließend werden in je einen Becher von Probe und Vergleich

| | |
|---|---|
| 9,0 g | NC-Firnis (1.) zugegeben |

und nochmals 2 Minuten mit der Schüttelmaschine geschüttelt. Diese jetzt 12 %igen Konzentrate werden über ein Sieb in eine Glasflasche abgefüllt und zur Messung der Viskosität verwendet.
4. In die beiden weiteren Becher von Probe und Vergleich werden je

| | |
|---|---|
| 32,0 g | NC-Firnis (1.) und |
| 4,0 g | Methoxypropanol zugegeben |

und nochmals 2 Minuten geschüttelt. Diese jetzt 7,5 %igen fertigen Druckfarben werden von den Glaskugeln abgetrennt und in eine Glasflasche gefüllt. Vor dem Verdrucken bleibt die Farbe 10 Minuten zum Entweichen der Luftblasen stehen.
5. Druck

Die oben beschriebenen 7,5 %igen Druckfarben werden mit einer Tiefdruckprobedruckmaschine je einmal auf Papier und Polypropylen (PP)-Folie gedruckt, und zwar Probe und Vergleich nebeneinander auf dem gleichen Druckträger.

Jeder Druck wird sofort nach dem Drucken einige Sekunden lang auf eine Heizplatte mit einer Temperatur von 60°C gelegt, um ein Weißanlaufen des Druckes zu verhindern.

6. Viskositätsmessung

Die Messung der Viskosität wird an den oben beschriebenen 12 %igen Konzentraten durchgeführt (z.B. mit dem Rotovisko RV3 oder RV1 2 oder Viskotester VT 500, Fa. Haake, Karlsruhe).

7. Beurteilung

Anhand des Andruckes auf Papier werden Farbstärke, Farbton und Reinheit sowie am Druck über Schwarz die Transparenz bewertet.

Am Druck auf PP-Folie (unterlegt mit Papier) oder Alu-Folie wird der Glanz und die Transparenz bewertet.

Weicht die Farbstärke der beiden Farben um mehr als 5% voneinander ab, so wird die kräftigere Farbe (Probe oder Typ) entsprechend mit Firnis (1.) abgeschwächt (z.B. auf 95 Teile, 90 Teile usw.) und erneut gegen die 2. Farbe angedruckt.

Die Pigmente aus den Beispielen und Vergleichsbeispielen werden auf die oben beschriebene Arbeitsweise zu Druckfarben verarbeitet, und mit diesen Druckfarben werden Drucke erzeugt. In der folgenden Tabelle wird aufgezeigt, wie die Drucke aus Pigmenten der Beispiele (Spalte 2) im coloristischen Vergleich (Spalte 3) gegen die Drucke aus den entsprechenden Pigmenten der Vergleichsbeispiele (Spalte 4) beurteilt werden.

| Färbebeispiel | Pigment aus Beispiel | Coloristische Bewertung | Pigment aus Vergleichsbeispiel |
|---|---|---|---|
| 1 | 1 | wesentlich grüner, transparenter und glänzender; merklich reiner | 1 |
| 2 | 2 | deutlich grüner, transparenter und glänzender; etwas reiner | 1 |
| 3 | 3 | merklich grüner, transparenter und glänzender | 1 |
| 4 | 4 | merklich grüner, transparenter und glänzender | 1 |
| 5 | 5 | etwas glänzender und transparenter | 1 |
| 6-16 | 6-16 | merklich bis deutlich grüner,transparenter und glänzender; etwas bis merklich reiner | 1 |
| 17 | 18 | merklich grüner, transparenter und glänzender; etwas reiner | 1 |
| 18 | 19 | deutlich grüner, transparenter und glänzender; etwas reiner | 1 |
| 19 | 20 | merklich bis deutlich grüner, transparenter und glänzender; etwas reiner | 1 |
| 20 | 19 | bedeutend grüner, etwas reiner, wesentlich transparenter | 2 |
| 21 | 19 | deutlich bis wesentlich grüner, transparenter und glänzender | 3 |
| 22 | 19 | bedeutend transparenter; wesentlich grüner und glänzender; merklich reiner | 4 |
| 23-27 | 23-27 | bedeutend glänzender; wesentlich grüner und transparenter; merklich reiner | 5 |
| 28 | 23 | wesentlich transparenter; merklich grüner, reiner und glänzender | 6 |
| 29 | 23 | wesentlich transparenter; merklich grüner, reiner und glänzender | 7 |
| 30 | 28 | merklich transparenter; deutlich glänzender | 8 |
| 31 | 29 | deutlich transparenter; merklich glänzender; etwas reiner | 9 |

| Färbe-beispiel | Pigment aus Beispiel | Coloristische Bewertung | Pigment aus Vergleichsbeispiel |
|---|---|---|---|
| 32 | 30 | wesentlich transparenter; merklich bis deutlich glänzender; etwas trüber | 10 |
| 33 | 31 | wesentlich transparenter; merklich glänzender | 11 |
| 34 | 31 | deutlich transparenter und glänzender; merklich grüner und reiner | 12 |
| 35 | 31 | deutlich reiner; merklich bis deutlich transparenter und glänzender | 13 |
| 36 | 32 | merklich transparenter und glänzender | 14 |
| 37 | 33 | deutlich transparenter, etwas matter | 16 |
| 38 | 34 | deutlich transparenter; merklich glänzender; etwas grüner | 17 |
| 39 | 35 | merklich bis deutlich transparenter und glänzender; merklich grüner; etwas reiner | 18 |
| 40 | 36 | wesentlich grüner und reiner; merklich bis deutlich glänzender | 19 |
| 41 | 36 | wesentlich glänzender; merklich bis deutlich transparenter; merklich reiner | 20 |
| 42 | 37 | deutlich transparenter und grüner; etwas reiner und matter | 22 |
| 43 | 38 | deutlich transparenter; merklich glänzender | 23 |
| 44 | 39 | merklich bis deutlich transparenter und glänzender; merklich röter | 24 |
| 45 | 39 | wesentlich transparenter; deutlich glänzender; merklich grüner | 25 |
| 46 | 40 | wesentlich grüner, transparenter und glänzender | 27 |
| 47 | 41 | deutlich transparenter und glänzender; etwas grüner und reiner | 28 |
| 48 | 41 | wesentlich transparenter und glänzender; merklich röter | 29 |

| Färbe-beispiel | Pigment aus Beispiel | Coloristische Bewertung | Pigment aus Vergleichsbeispiel |
|---|---|---|---|
| 49 | 41 | merklich bis deutlich grüner, reiner, transparenter und glänzender | 30 |
| 50 | 42 | wesentlich transparenter; deutlich grüner; etwas reiner und matter | 31 |
| 51 | 43 | deutlich transparenter, glänzender, reiner und grüner | 32 |
| 52 | 44 | merklich bis deutlich transparenter und glänzender | 33 |
| 53 | 44 | wesentlich transparenter und glänzender; etwas röter und trüber | 34 |
| 54 | 45 | deutlich transparenter und glänzender | 35 |
| 55 | 46 | deutlich transparenter und glänzender, etwas grüner | 36 |
| 56 | 47 | merklich grüner und reiner; wesentlich transparenter und glänzender | 37 |

Weitere anwendungstechnische Vergleiche:

Das Pigment aus Beispiel 2 weist eine deutlich bessere Lösungsmittelechtheit (nach DIN 16524) auf als das Pigment aus Beispiel 17.

Das Pigment aus Beispiel 19 weist eine merklich bessere Lösungsmittelechtheit (nach DIN 16524) auf als das Pigment aus Beispiel 20.

Das Pigment aus Beispiel 19 weist eine merklich bessere Lösungsmittelechtheit (nach DIN 16524) auf als das Pigment aus Beispiel 21.

Das Pigment aus Beispiel 19 weist eine deutlich bessere Lösungsmittelechtheit (nach DIN 16524) auf als das Pigment aus Beispiel 22.

Das Pigment aus Beispiel 41 weist eine wesentlich bessere Lösungsmittelechtheit (nach DIN 16524) auf als das Pigment aus Vergleichsbeispiel 33.

Das 12%ige Druckfarbenkonzentrat aus dem Pigment nach Beispiel 19 weist eine wesentlich geringere Viskosität auf als das aus einem Pigment nach Beispiel 20.

Das Pigment aus Beispiel 33 läßt sich im Paint Shaker zu einer Druckfarbe verarbeiten, während das Pigment aus Vergleichsbeispiel 15 eindickt und sich nicht verarbeiten läßt.

Das Pigment aus Beispiel 37 läßt sich im Paint Shaker zu einer Druckfarbe verarbeiten, während das Pigment aus Vergleichsbeispiel 21 eindickt und sich nicht verarbeiten läßt.

Das Pigment aus Beispiel 40 läßt sich im Paint Shaker zu einer Druckfarbe verarbeiten, während das Pigment aus Vergleichsbeispiel 26 eindickt und sich nicht verarbeiten läßt.

**Patentansprüche**

1. Verfahren zur Herstellung eines Disazopigments der Formel (I) oder eines Gemisches besagter Disazopigmente

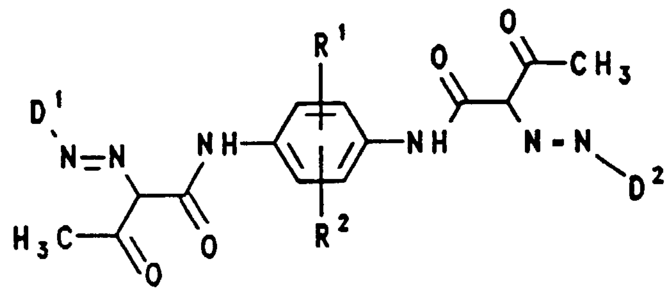

(I)

worin

$D^1$ und $D^2$ gleich oder verschieden sind und einen unsubstituierten oder einen durch 1 bis 5 Reste substituierten Phenylrest, einen unsubstituierten Naphthylrest, einen durch 1 bis 3 Reste substituierten Naphthylrest, einen unsubstituierten Anthrachinonrest, einen durch 1 bis 3 Reste substituierten Anthrachinonrest, einen Rest eines kondensierten aromatischen Heterocyclus, welcher 1 bis 3 gleiche oder verschiedene Heteroatome aus der Reihe Stickstoff, Sauerstoff und Schwefel enthält und welcher unsubstituiert oder durch 1 bis 3 Reste substituiert ist;

$R^1$ und $R^2$ gleich oder verschieden sind und ein Wasserstoff- oder Halogenatom, eine $C_1$-$C_4$-Alkyl-, $C_1$-$C_4$-Alkoxy-, eine $C_1$-$C_5$-Alkoxycarbonyl-, Nitro-, Cyano-, Phenoxy- oder Trifluormethylgruppe bedeuten,

durch Azokupplung,
dadurch gekennzeichnet, daß man die Herstellung des Pigments

a) in wäßrigem gegebenenfalls acetatgepuffestem Medium und in Abwesenheit eines organischen Lösungsmittels durchführt und

b) spätestens unmittelbar vor der Isolierung des Disazopigments mindestens ein nichtionisches Tensid, das in wäßriger Lösung einen Trübungspunkt hat, zusetzt.

2. Verfahren nach Anspruch 1, dadurch gekennzeichnet, daß der Zusatz des oder der nichtionischen Tenside vor

der Azokupplung erfolgt.

3. Verfahren nach Anspruch 1, dadurch gekennzeichnet, daß der Zusatz des oder der nichtionischen Tenside nach der Azokupplung vor einem Aufheizen der Reaktionsmischung erfolgt.

4. Verfahren nach einem der Ansprüche 1 bis 3, dadurch gekennzeichnet, daß der Trübungspunkt des oder der nichtionischen Tenside in Wasser zwischen 5 und 90°C, vorzugsweise zwischen 20 und 70°C, liegt.

5. Verfahren nach mindestens einem der Ansprüche 1 bis 4, dadurch gekennzeichnet, daß das oder die nichtionischen Tenside in einer Menge von 3 bis 25, vorzugsweise 7 bis 17, Gewichtsteilen, bezogen auf 100 Gewichtsteile Disazopigment oder Disazopigment-Gemisch, zugesetzt werden.

6. Verfahren nach mindestens einem der Ansprüche 1 bis 5, dadurch gekennzeichnet, daß man als nichtionisches Tensid ein Oxalkylat einer aromatischen, cycloaliphatischen oder heterocyclischen Hydroxy- oder Aminoverbindung oder eine Mischung von mindestens zwei solcher Oxalkylate einsetzt.

7. Verfahren nach mindestens einem der Ansprüche 1 bis 6, dadurch gekennzeichnet, daß als nichtionisches Tensid mindestens eine Verbindung aus der Gruppe der Oxalkylate von Alkoholen, Fettalkoholen, Phenolen, Alkylphenolen, Naphtholen, Alkylnaphtholen oder Fettaminen, vorzugsweise die Ethylenoxid- oder Propylenoxid-Addukte mit den genannten Alkoholen und Aminen, sowie aus der Gruppe der Blockpolymere von Ethylenoxid, Propylenoxid oder einer Mischung davon eingesetzt wird.

8. Verfahren nach mindestens einem der Ansprüche 1 bis 6, dadurch gekennzeichnet, daß das nichtionische Tensid ein Gemisch ist, welches bei der Oxalkylierung von synthetischen Fettalkoholen aus der Oxosynthese oder bei der Oxalkylierung von natürlichen Fettalkoholen, vorzugsweise solchen, die nach Fettspaltung und Reduktion von Kokosöl, Palmöl, Baumwollsaatöl, Sonnenblumenöl, Sojabohnenöl, Leinöl, Rüböl, Talg oder Fischöl erhältlich sind, mit Ethylenoxid, Propylenoxid oder einem Gemisch davon entsteht.

9. Verfahren nach mindestens einem der Ansprüche 1 bis 6, dadurch gekennzeichnet, daß das nichtionische Tensid ein Oxalkylat, vorzugsweise Oxethylat, Oxpropylat oder eine Kombination davon, eines Fettamins, vorzugsweise Kokosfettamins, Talgfettamins oder Oleylamins, ist.

10. Verfahren nach mindestens einem der Ansprüche 1 bis 9, dadurch gekennzeichnet, daß $D^1$ und $D^2$ gleich oder verschieden sind und einen unsubstituierten oder einen durch 1 bis 3 Reste aus der Gruppe $C_1$-$C_4$-Alkyl, $C_1$-$C_4$-Alkoxy, Phenoxy, Halogenphenoxy, Carboxy, Carbalkoxy, Acyl, Acyloxy, Acylamino, N-mono- oder N,N-disubstituiertes Carbamoyl, N-mono- oder N,N-disubstituiertes Sulfamoyl, Sulfo, Cyano, Halogen, Nitro oder Trifluormethyl substituierten Phenylrest bedeuten.

11. Verfahren nach mindestens einem der Ansprüche 1 bis 9, dadurch gekennzeichnet, daß $D^1$ und $D^2$ gleich oder verschieden sind und einen über die 1- oder 2-Position mit dem N-Atom der Azobrücke verbundenen Anthrachinonrest bedeuten, der unsubstituiert ist oder durch 1 bis 3 Reste aus der Gruppe Halogen, Hydroxy, Nitro, $C_1$-$C_4$-Alkyl, Carboxyl, Acyl, COO-$C_1$-$C_4$-Alkyl, $CONH_2$, Acylamino, $C_1$-$C_4$-Alkoxy, $C_1$-$C_6$-Alkylamino, Benzylamino, Anilino, $C_1$-$C_4$-Alkyithio und $C_1$-$C_4$-Alkylphenylsulfonylamino substituiert ist.

12. Verfahren nach mindestens einem der Ansprüche 1 bis 11, dadurch gekennzeichnet, daß $D^1$ und $D^2$ gleich oder verschieden sind und einen Rest eines aromatischen Heterocyclus aus der Gruppe Benzimidazol, Benzimidazolon, Benzimidazolthion, Benzoxazol, Benzoxazolon, Benzothiazol, 2-Phenylbenzothiazol, Benzothiazolon, Indazol, Phthalimid, Naphthalimid, Benzotriazol, Chinolin, Chinazolin, Chinazolinon, Phthalazin, Phthalazinon, Chinoxalin, Benzo[c,d]indolon, Benzimidazo[1,2-a]pyrimidon, Benzo[e][1,3]oxazinon, Dibenzo[a,c]phenazin, Chinoxalinon, Carbazol und Indol bedeuten, wobei die besagten Heterocyclen unsubstituiert oder durch 1 bis 3 Reste aus der Gruppe Halogen, Amino, $C_1$-$C_4$-Alkyl, Acetamido, Carbomethoxyamino, $C_1$-$C_4$-Alkoxy, Nitro, Hydroxyphenyl, Phenyl, Sulfo und Carboxyl substituiert sind.

13. Verfahren nach mindestens einem der Ansprüche 1 bis 12, dadurch gekennzeichnet, daß D' und $D^2$ jeweils dieselbe Bedeutung haben.

14. Verfahren nach mindestens einem der Ansprüche 1 bis 13, dadurch gekennzeichnet, daß man ein Amin der Formel D-$NH_2$ diazotiert und mit 0,5 bis 0,53 Mol, bezogen auf ein Mol des Amins D-$NH_2$, einer Verbindung der Formel

(III) kuppelt,

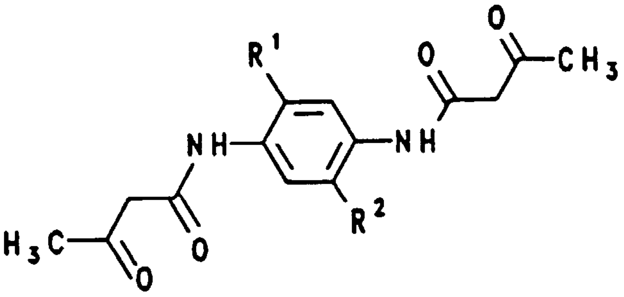

(III)

worin
$R^1$ und $R^2$ gleich oder verschieden sind und ein Wasserstoff-, Chlor- oder Bromatom, Trifluormethyl, Methyl, Ethyl, Methoxy, Ethoxy, Propoxy, Butoxy, Cyano, Nitro, Ethoxycarbonyl oder Methoxycarbonyl bedeuten.

## Claims

**1.** A process for preparing a disazo pigment of the formula (I) or a mixture of said disazo pigments

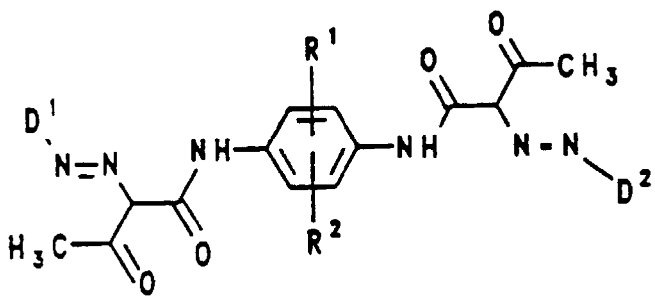

(I)

where

$D^1$ and $D^2$ are identical or different and each is unsubstituted phenyl, phenyl with from 1 to 5 substituents, unsubstituted naphthyl, naphthyl with from 1 to 3 substituents, unsubstituted anthraquinonyl, anthraquinonyl with from 1 to 3 substituents, or a radical of a fused aromatic heterocycle which contains from 1 to 3 identical or different heteroatoms from nitrogen, oxygen and sulfur and is unsubstituted or has from 1 to 3 substituents,

$R^1$ and $R^2$ are identical or different and each is hydrogen, halogen, $C_1$-$C_4$-alkyl, $C_1$-$C_4$-alkoxy, $C_1$-$C_5$-alkoxycarbonyl, nitro, cyano, phenoxy or trifluoromethyl, by azo coupling, characterized in that it comprises

a) preparing the pigment in an aqueous, optionally acetate-buffered medium and in the absence of an organic solvent and
b) adding at the latest immediately prior to the isolation of the disazo pigment at least one nonionic surfactant which has a cloud point in aqueous solution.

**2.** The process of claim 1, characterized in that the addition of the nonionic surfactant(s) takes place prior to azo coupling.

**3.** The process of claim 1, characterized in that the addition of the nonionic surfactant(s) takes place after azo coupling prior to a heating-up of the reaction mixture.

**4.** The process of any one of claims 1 to 3, characterized in that the cloud point of the nonionic surfactant(s) in water

is between 5 and 90°C, preferably between 20 and 70°C.

5. The process of at least one of claims 1 to 4, characterized in that the nonionic surfactant(s) is or are added in an amount of from 3 to 25, preferably from 7 to 17, parts by weight, based on 100 parts by weight of disazo pigment or disazo pigment mixture.

6. The process of at least one of claims 1 to 5, characterized in that the nonionic surfactant used is an alkoxylate of an aromatic, cycloaliphatic or heterocyclic hydroxy or amino compound or a mixture of at least two such alkoxylates.

7. The process of at least one of claims 1 to 6, characterized in that the nonionic surfactant used is at least one compound from the group of the alkoxylates of alcohols, fatty alcohols, phenols, alkylphenols, naphthols, alkylnaphthols or fatty amines, preferably the ethylene oxide or propylene oxide adducts with said alcohols and amines, and from the group of the block polymers of ethylene oxide, propylene oxide or a mixture thereof.

8. The process of at least one of claims 1 to 6, characterized in that the nonionic surfactant is a mixture formed in the alkoxylation of synthetic fatty alcohols from the oxo process or in the alkoxylation of natural fatty alcohols, preferably those obtainable by fat cleavage and reduction of coconut oil, palm oil, cottonseed oil, sunflower oil, soybean oil, linseed oil, rapeseed oil, tallow or fish oil, with ethylene oxide, propylene oxide or a mixture thereof.

9. The process of at least one of claims 1 to 6, characterized in that the nonionic surfactant is an alkoxylate, preferably ethoxylate, propoxylate or a combination thereof, of a fatty amine, preferably of cocoamine, tallowamine or oleylamine.

10. The process of at least one of claims 1 to 9, characterized in that $D^1$ and $D^2$ are identical or different and each is unsubstituted phenyl or phenyl substituted by from 1 to 3 radicals selected from the group consisting of $C_1$-$C_4$-alkyl, $C_1$-$C_4$-alkoxy, phenoxy, halophenoxy, carboxyl, carbalkoxy, acyl, acyloxy, acylamino, N-mono- or N,N-disubstituted carbamoyl, N-mono-or N,N-disubstituted sulfamoyl, sulfo, cyano, halogen, nitro or trifluoromethyl.

11. The process of at least one of claims 1 to 9, characterized in that $D^1$ and $D^2$ are identical or different and each is an anthraquinone radical which is linked by the 1- or 2-position to the nitrogen atom of the azo bridge and is unsubstituted or substituted by from 1 to 3 radicals selected from the group consisting of halogen, hydroxyl, nitro, $C_1$-$C_4$-alkyl, carboxyl, acyl, COO-$C_1$-$C_4$-alkyl, $CONH_2$, acylamino, $C_1$-$C_4$-alkoxy, $C_1$-$C_6$-alkylamino, benzylamino, anilino, $C_1$-$C_4$-alkylthio and $C_1$-$C_4$-alkylphenylsulfonylamino.

12. The process of at least one of claims 1 to 11, characterized in that $D^1$ and $D^2$ are identical or different and each is a radical of an aromatic heterocycle from the group consisting of benzimidazole benzimidazolone, benzimidazolethione, benzoxazole, benzoxazolone, benzothiazole, 2-phenylbenzothiazole, benzothiazolone, indazole, phthalimide, naphthalimide, benzotriazole, quinoline, quinazoline, quinazolinone, phthalazine, phthalazinone, quinoxaline, benzo[c,d]indolone, benzimidazo[1,2-a]pyrimidone, benzo[e] [1,3]oxazinone, dibenzo[a,c]phenazine, quinoxalinone, carbazole and indole, said heterocycles being unsubstituted or substituted by from 1 to 3 radicals selected from the group consisting of halogen, amino, $C_1$-$C_4$-alkyl, acetamido, carbomethoxyamino, $C_1$-$C_4$-alkoxy, nitro, hydroxyphenyl, phenyl, sulfo and carboxyl.

13. The process of at least one of claims 1 to 12, characterized in that $D^1$ and $D^2$ have the same meaning.

14. The process of at least one of claims 1 to 13, characterized in that an amine of the formula D-$NH_2$ is diazotized and coupled with from 0.5 to 0.53 mol, based on one mole of the amine D-$NH_2$, of a compound of the formula (III)

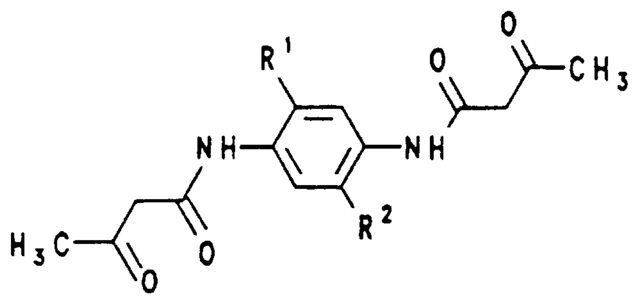

(III)

where
$R^1$ and $R^2$ are identical or different and each is hydrogen, chlorine, bromine, trifluoromethyl, methyl, ethyl, methoxy, ethoxy, propoxy, butoxy, cyano, nitro, ethoxycarbonyl or methoxycarbonyl.

## Revendications

**1.** Procédé de préparation d'un pigment disazoïque de formule (I) ou d'un mélange de ces pigments disazoïques :

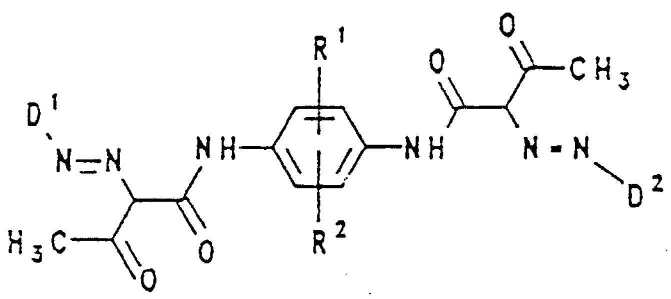

(I)

où :

$D^1$ et $D^2$ sont identiques ou différents et représentent chacun un radical phényle non substitué ou substitué par 1 à 5 substituants, un radical naphtyle non substitué, un radical naphtyle substitué par 1 à 3 substituants, un radical anthraquinone non substitué, un radical anthraquinone substitué par 1 à 3 substituants, un radical d'un composé hétérocyclique aromatique condensé, qui contient de 1 à 3 hétéroatomes identiques ou différents choisis parmi l'azote, l'oxygène et le soufre, et qui est non substitué ou substitué par 1 à 3 substituants ;

$R^1$ et $R^2$ sont identiques ou différents et représentent chacun un atome d'hydrogène ou d'halogène, un groupe alkyle en $C_1$-$C_4$, alcoxy en $C_1$-$C_4$, (alcoxy en $C_1$-$C_5$)carbonyle, nitro, cyano, phénoxy ou trifluorométhyle,

par copulation azoïque,
caractérisé en ce qu'on met en oeuvre la préparation du pigment :

a) en milieu aqueux, éventuellement tamponné par un tampon acétate, et en l'absence d'un solvant organique, et
b) au plus tard immédiatement avant isolement du pigment disazoïque, on ajoute au moins un tensioactif non ionique lequel a un point trouble en solution aqueuse.

**2.** Procédé selon la revendication 1, caractérisé en ce que l'addition du ou des tensioactifs non ioniques s'effectue avant la copulation azoïque.

**3.** Procédé selon la revendication 1, caractérisé en ce que l'addition du ou des tensioactifs non ioniques s'effectue

après la copulation azoïque, avant chauffage du mélange réactionnel.

4. Procédé selon l'une des revendications 1 à 3, caractérisé en ce que le point de trouble du ou des tensioactifs non ioniques dans l'eau est compris entre 5 et 90°C et de préférence entre 20 et 70°C.

5. Procédé selon au moins l'une des revendications 1 à 4, caractérisé en ce que le ou les tensioactifs sont ajoutés en une quantité de 3 à 25 et de préférence de 7 à 17 parties en poids pour 100 parties en poids du pigment disazoïque ou du mélange de pigments disazoïques .

6. Procédé selon au moins l'une des revendications 1 à 5, caractérisé en ce qu'on utilise en tant que tensioactif non ionique un produit d'alcoxylation d'un composé hydroxylé ou aminé aromatique, cycloaliphatique ou hétérocyclique, ou un mélange d'au moins deux de ces produits d'alcoxylation.

7. Procédé selon au moins l'une des revendications 1 à 6, caractérisé en ce qu'on utilise en tant que tensioactif non ionique au moins un composé choisi parmi les produits d'alcoxylation d'alcools, d'alcools gras, de phénols, d'alkylphénols, de naphtols, d'alkylnaphtols ou d'amines grasses, de préférence les produits d'addition d'oxyde d'éthylène ou d'oxyde de propylène avec les alcools ou amines mentionnés ci-dessus, et choisi aussi parmi les copolymères séquencés de l'oxyde d'éthylène, de l'oxyde de propylène, ou d'un de leurs mélanges.

8. Procédé selon au moins l'une des revendications 1 à 6, caractérisé en ce que le tensioactif non ionique est un mélange qui est obtenu avec de l'oxyde d'éthylène, de l'oxyde de propylène ou un de leurs mélanges, lors de l'alcoxylation d'alcools gras de synthèse obtenus par synthèse oxo, ou lors de l'alcoxylation d'alcools gras naturels, de préférence ceux que l'on peut obtenir par dissociation des graisses et réduction de l'huile de coprah, de l'huile de palme, de l'huile de graine de coton, de l'huile de tournesol, de l'huile de soja, de l'huile de lin, de l'huile de colza, du suif ou de l'huile de poisson.

9. Procédé selon au moins l'une des revendications 1 à 6, caractérisé en ce que le tensioactif non ionique est un produit d'alcoxylation, de préférence un produit d'éthoxylation, de propoxylation ou une de leurs combinaisons, d'une amine grasse, de préférence l'amine de l'huile de coprah, l'amine de la suif ou l'oléylamine.

10. Procédé selon au moins l'une des revendications 1 à 9, caractérisé en ce que $D^1$ et $D^2$ sont identiques ou différents et représentent chacun un radical phényle non substitué, ou substitué par 1 à 3 substituants choisis parmi l'ensemble comprenant les groupes alkyle en $C_1$-$C_4$, alcoxy en $C_1$-$C_4$, phénoxy, halogénophénoxy, carboxy, carbalcoxy, acyle, acyloxy, acylamino, carbamoyle N-mono-substitué ou N,N-disubstitué, sulfamoyle N-mono-substitué ou N,N-disubstitué, sulfo, cyano, halogéno, nitro ou trifluorométhyle.

11. Procédé selon au moins l'une des revendications 1 à 9, caractérisé en ce que $D^1$ et $D^2$ sont identiques ou différents et représentent chacun un radical anthraquinone lié par l'intermédiaire de la position 1 ou 2 à l'atome d'azote du pont azo, radical qui est non substitué, ou est substitué par 1 à 3 substituants choisis parmi l'ensemble comprenant les groupes halogéno, hydroxy, nitro, alkyle en $C_1$-$C_4$, carboxyle, acyle, COO-(alkyle en $C_1$-$C_4$), $CONH_2$, acylamino, alcoxy en $C_1$-$C_4$, alkylamino en $C_1$-$C_6$, benzylamino, anilino, alkylthio en $C_1$-$C_4$ et (alkyle en $C_1$-$C_4$) phénylsulfonylamino.

12. Procédé selon au moins l'une des revendications 1 à 11, caractérisé en ce que $D^1$ et $D^2$ sont identiques ou différents et représentent chacun un résidu d'un composé hétérocyclique aromatique choisi dans l'ensemble comprenant le benzimidazole, la benzimidazolone, la benzimidazolethione, le benzoxazole, la benzoxazolone, le benzothiazole, le 2-phénylbenzothiazole, la benzo-thiazolone, l'indazole, le phtalimide, le naphtalimide, le benzotriazole, la quinoléine, la quinazoline, la quinazolinone, la phtalazine, la phtalazinone, la quino-xaline, la benzo[c,d]indolone, la benzimidazo(1,2-a]pyrimidone, la benzo[e][1,3]oxazinone,la dibenzo-[a,c]phénazine, la quinoxalinone, le carbazole et l'indole, où les composés hétérocycliques mentionnés ci-dessus sont non substitués ou substitués par 1 à 3 substituants choisis dans l'ensemble comprenant les groupes halogéno, amino, alkyle en $C_1$-$C_4$, acétamido, carbométhoxy-amino, alcoxy en $C_1$-$C_4$, nitro, hydroxyphényle, phényle, sulfo et carboxyle.

13. Procédé selon au moins l'une des revendications 1 à 12, caractérisé en ce que $D^1$ et $D^2$ ont les mêmes significations.

14. Procédé selon au moins l'une des revendications 1 à 13, caractérisé en ce qu'on soumet à une diazotation une amine de formule $D\text{-}NH_2$ et qu'on la soumet à une copu-lation avec 0,5 à 0,53 mole, par mole de l'amine $D\text{-}NH_2$,

d'un composé de formule (III) :

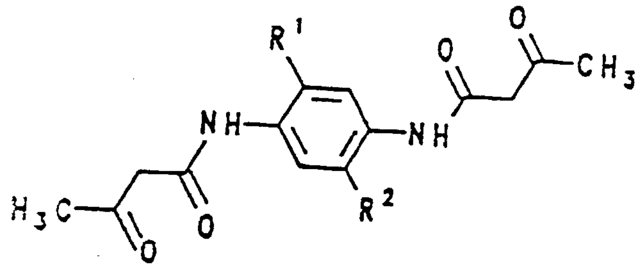

(III)

dans laquelle

$R^1$ et $R^2$ sont identiques ou différents et représentent chacun un atome d'hydrogène, de chlore ou de brome, ou un groupe trifluorométhyle, méthyle, éthyle, méthoxy, éthoxy, propoxy, butoxy, cyano, nitro, éthoxycarbonyle ou méthoxycarbonyle.